(19) Europäisches Patentamt / European Patent Office / Office européen des brevets

(11) **EP 4 761 380 A1**

(12) **EUROPEAN PATENT APPLICATION**
published in accordance with Art. 153(4) EPC

(43) Date of publication:
**17.06.2026 Bulletin 2026/25**

(21) Application number: **24853654.2**

(22) Date of filing: **08.08.2024**

(51) International Patent Classification (IPC):
**H04W 52/02** (2009.01)

(52) Cooperative Patent Classification (CPC):
**H04W 52/02;** Y02D 30/70

(86) International application number:
**PCT/CN2024/110673**

(87) International publication number:
**WO 2025/036244 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 11.08.2023 CN 202311012573
05.08.2024 PCT/CN2024/109690
06.08.2024 CN 202411070560

(71) Applicant: **Vivo Mobile Communication Co., Ltd.
Dongguan, Guangdong 523863 (CN)**

(72) Inventor: **CHEN, Li
Dongguan, Guangdong 523863 (CN)**

(74) Representative: **Conti, Marco
Bugnion S.p.A.
Via di Corticella, 87
40128 Bologna (IT)**

(54) **COMMUNICATION METHOD AND APPARATUS, DEVICE, AND READABLE STORAGE MEDIUM**

(57) This application provides a communication method, a communication apparatus, a device, and a readable storage medium and relates to the field of communications. The communication method includes: determining a first group identifier ID of a first terminal group to which a terminal device belongs; receiving a low power wake-up signal LP-WUS from an access network device, where the LP-WUS includes first indication information, the first indication information being used to indicate a first target group ID of a first target terminal group to be woken up; and determining, based on the first group ID and the first indication information, whether the terminal device is to be woken up.

FIG. 6

**Description**

**CROSS-REFERENCE TO RELATED APPLICATIONS**

This application claims priority to Chinese Patent Application No. 202311012573.1 filed in China on August 11, 2023, Chinese Patent Application No. 202411070560.4 filed in China on August 6, 2024, and PCT International Application No. PCT/CN2024/109690 filed on August 5, 2024, which are incorporated herein by reference in their entireties.

**TECHNICAL FIELD**

This application relates to the field of communications, and more particularly, to a communication method, a communication apparatus, a device, and a readable storage medium.

**BACKGROUND**

In some communication mechanisms, a network side may configure a low power wake-up signal (Low Power-Wake up Signal, LP-WUS) to reduce power consumption of a terminal device. In a power-saving state, the terminal device enables a low power wake-up reception module to monitor the LP-WUS and disables a main communication module. The main communication module remains disabled when not woken up and does not transmit or receive data. When downlink data arrives, if the low power wake-up reception module in the terminal device receives the LP-WUS, the low power wake-up reception module triggers the main communication module to switch from the disabled state to an operating state to perform data reception and transmission. In scenarios where the LP-WUS is configured on the network side, how to reduce the false wake-up probability of the terminal device remains an urgent issue to be addressed.

**SUMMARY**

This application provides a communication method, a communication apparatus, a device, and a readable storage medium, so as to reduce the false wake-up probability of terminal devices and reduce power consumption of some terminal devices.

In a first aspect, a communication method is provided, performed by a terminal device, including:

determining a first group identifier ID of a first terminal group to which the terminal device belongs;
receiving a low power wake-up signal LP-WUS from an access network device, where the LP-WUS includes first indication information, the first indication information being used to indicate a first target group ID of a first target terminal group to be woken up, or the LP-WUS corresponds to the first target group ID of the first target terminal group to be woken up; and
determining, based on the first group ID and/or the first indication information, whether the terminal device is to be woken up.

In a second aspect, a communication method is provided, performed by an access network device, including:

determining a first group identifier ID of a first terminal group to which a terminal device belongs;
transmitting a low power wake-up signal LP-WUS, where the LP-WUS includes first indication information, the first indication information being used to indicate waking up terminal devices in the first terminal group corresponding to the first group ID, or the LP-WUS corresponds to a first target group ID of a first target terminal group to be woken up.

In a third aspect, a communication apparatus is provided, including:

a determining unit configured to determine a first group identifier ID of a first terminal group to which a terminal device belongs;
a receiving unit configured to receive a low power wake-up signal LP-WUS from an access network device, where the LP-WUS includes first indication information, the first indication information being used to indicate a first target group ID of a first target terminal group to be woken up, or the LP-WUS corresponds to the first target group ID of the first target terminal group to be woken up; and
the determining unit is further configured to determine, based on the first group ID and/or the first indication information, whether the terminal device is to be woken up.

In a fourth aspect, a communication apparatus is provided, including:

a determining unit configured to determine a first group identifier ID of a first terminal group to which a terminal device belongs;
a transmitting unit configured to transmit a low power wake-up signal LP-WUS, where the LP-WUS includes first indication information, the first indication information being used to indicate waking up terminal devices in the first terminal group corresponding to the first group ID, or the LP-WUS corresponds to a first target group ID of a first target terminal group to be woken up.

In a fifth aspect, an embodiment of this application provides a terminal device, including a processor and a memory, where the memory is configured to store a computer program, and the processor is configured to invoke and run the computer program stored in the memory to perform the method according to the foregoing first aspect.

In a sixth aspect, an embodiment of this application provides a network device, including a processor and a memory, where the memory is configured to store a computer program, and the processor is configured to invoke and run the computer program stored in the memory to perform the method according to the foregoing second aspect.

In a seventh aspect, an embodiment of this application provides a computer-readable storage medium configured to store a computer program, where the computer program causes a computer to perform the method according to the foregoing first aspect or second aspect.

In an eighth aspect, an embodiment of this application provides a chip, including a processor, where the processor is configured to invoke and run a computer program from a memory, so that the chip performs the method according to the foregoing first aspect or second aspect.

In a ninth aspect, an embodiment of this application provides a computer program product, including a computer program/instruction, where when the computer program/instruction is executed by a processor, steps of the method according to the foregoing first aspect or second aspect are implemented.

In a tenth aspect, an embodiment of this application provides a communication system, including a terminal device and a network device, where the terminal device and the network device communicate with each other to implement the method according to the foregoing first aspect or second aspect.

According to the embodiments of this application, a terminal device determines a group ID of a terminal group to which the terminal device belongs, receives an LP-WUS from an access network device, and then determines whether it is to be woken up based on the group ID and a target group ID of a target terminal group to be woken up as indicated by the LP-WUS, thereby enabling wake-up indication on a group basis for a plurality of terminal devices to reduce the false wake-up probability of the terminal devices. Terminal devices outside the terminal group corresponding to the target group ID may not be woken up, thereby reducing power consumption of some terminal devices.

**BRIEF DESCRIPTION OF DRAWINGS**

FIG. 1 is a schematic diagram of a communication system to which embodiments of this application are applicable;

FIG. 2 is a schematic block diagram of an LP-WUS receiver;

FIG. 3 is a schematic diagram of a basic format of an LP-WUS;

FIG. 4A is a schematic diagram of an LP-WUS signal;

FIG. 4B is another schematic diagram of an LP-WUS signal;

FIG. 5 is a schematic diagram of an indication field of a PEI.

FIG. 6 is a schematic flowchart of a communication method according to an embodiment of this application;

FIG. 7 is a schematic flowchart of another communication method according to an embodiment of this application;

FIG. 8 is a schematic flowchart of still another communication method according to an embodiment of this application;

FIG. 9 is a schematic diagram of a communication apparatus according to an embodiment of this application;

FIG. 10 is a schematic diagram of another communication apparatus according to an embodiment of this application;

FIG. 11 is a schematic diagram of an electronic device according to an embodiment of this application;

FIG. 12 is a schematic diagram of a terminal device according to an embodiment of this application; and

FIG. 13 is a schematic diagram of a network device according to an embodiment of this application.

**DESCRIPTION OF EMBODIMENTS**

The technical solutions in this application will be described below with reference to the accompanying drawings.

The technical solutions in the embodiments of this application may be applied to various communication systems, for example, global system for mobile communications (global system for mobile communications, GSM), code division multiple access (code division multiple access, CDMA), wideband code division multiple access (wideband code division multiple access, WCDMA), general packet radio service (general packet radio service, GPRS), long term evolution (long term evolution, LTE), LTE frequency division duplex (frequency division duplex, FDD), LTE time division duplex (time division duplex, TDD), universal mobile telecommunication system (universal mobile telecommunication system, UMTS), worldwide interoperability for microwave access (worldwide interoperability for microwave access, WiMAX), a future 5th generation (5th generation, 5G) system, or new radio (new radio, NR).

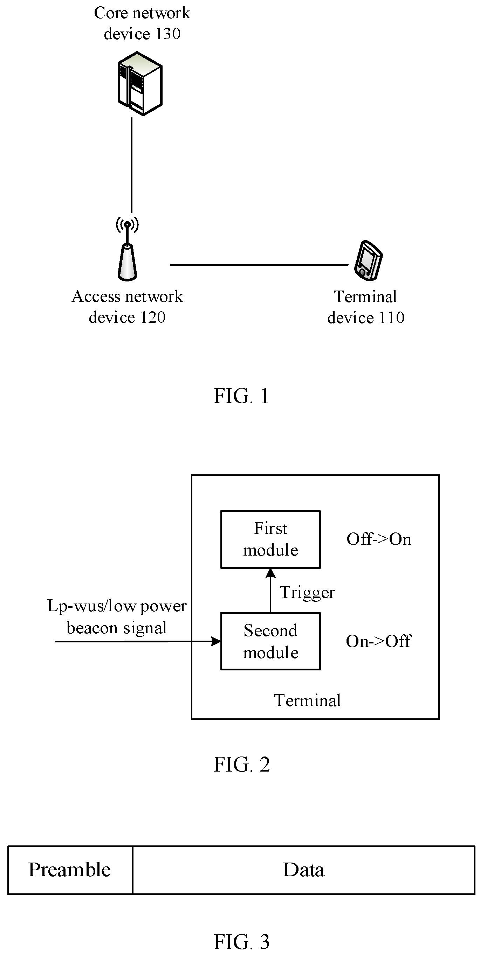

To facilitate understanding of the embodiments of this application, a communication system applicable to the embodiments of this application is first described in detail with reference to FIG. 1.

FIG. 1 shows a schematic diagram of a communication system according to an embodiment of this application. As shown in FIG. 1, the system includes a terminal device 110, an access network device 120, and a core network device 130. The terminal device 110 is connected to the access network device 120, and the access network device 120 is connected to the core network device 130, so that the terminal device 110 can communicate with the core network device 130 through the access network device 120.

The terminal device 110 in the embodiments of this application may also be referred to as user equipment (user equipment, UE), mobile station (mobile station, MS), mobile terminal (mobile terminal, MT), access terminal, subscriber unit, subscriber station, mobile station, remote station, remote terminal, mobile device, user terminal, terminal, wireless communication device, user agent, user apparatus, or the like.

The terminal device 110 may be a device that provides voice/data connectivity to a user, for example, a handheld device or an in-vehicle device having a wireless connection function. Currently, some examples of terminals are: mobile phones (mobile phone), tablets, laptops, handheld computers, mobile Internet devices (mobile internet device, MID), wearable devices, virtual reality (virtual reality, VR) devices, augmented reality (augmented reality, AR) devices, wireless terminals in industrial control (industrial control), wireless terminals in autonomous driving (autonomous driving), wireless terminals in remote medical surgery (remote medical surgery), wireless terminals in a smart grid (smart grid), wireless terminals in transportation safety (transportation safety), wireless terminals in a smart city (smart city), wireless terminals in a smart home (smart home), cellular phones, cordless phones, session initiation protocol (session initiation protocol, SIP) phones, wireless local loop (wireless local loop, WLL) stations, personal digital assistants (personal digital assistant, PDA), handheld devices with wireless communication capabilities, computing devices, or other processing devices connected to wireless modems, in-vehicle devices, wearable devices, terminal devices in 5G networks, or terminal devices in evolved public land mobile networks (public land mobile network, PLMN), which are not limited in the embodiments of this application. For example, the terminal device 110 is configured to receive a paging message from the access network device 120.

As an example rather than a limitation, in the embodiments of this application, the wearable device may also be referred to as a wearable smart device, a general term for devices that apply wearable technology to the intelligent design of daily wear and are developed to be worn by a user, such as glasses, gloves, watches, garments, and shoes. A wearable device is a portable device that is worn directly on the body or integrated into a user's clothing or accessory. A wearable device is not only a hardware device, but also achieves powerful functions through software support, data interaction, and cloud interaction. In a broad sense, wearable smart devices include full-featured, large-sized devices that can implement complete or partial functions without relying on smartphones, for example, smart watches or smart glasses, and devices that focus only on a specific type of application function and need to be used in conjunction with other devices such as smartphones, for example, various smart bracelets and smart jewelry for vital sign monitoring.

In addition, in the embodiments of this application, the terminal device 110 may alternatively be a terminal device in an internet of things (internet of things, IoT) system. IoT is an important part of future information technology development, and its main technical feature is to connect objects to a network through communication technology, thereby realizing a smart network of human-machine interconnection and object-object interconnection.

As introduced above, various terminal devices 110, if located on a vehicle (for example, placed in or mounted in the vehicle), may be considered as in-vehicle terminal devices, and the in-vehicle terminal devices are also referred to as on-board units (on-board unit, OBU), for example.

In the embodiments of this application, the access network device 120 is a device in a radio access network ((radio) access network, (R)AN), or a RAN node that accesses a terminal device to a wireless network, or a device in a next generation radio access network (next generation radio access network, NG-RAN). For example, as an example rather than a limitation, the access network device 120 may include: a gNB, a transmission reception point (transmission reception point, TRP), an evolved Node B (evolved Node B, eNB), a radio network controller (radio network controller, RNC), a Node B (Node B, NB), a base station controller (base station controller, BSC), a base transceiver station (base transceiver station, BTS), a home base station (for example, a home evolved NodeB or a home Node B, HNB), a base band unit (base band unit, BBU), or a wireless fidelity (wireless fidelity, WiFi) access point (access point, AP).

In a network structure, the access network device 120 may include a centralized unit (centralized unit, CU) node, or a distributed unit (distributed unit, DU) node, or a RAN device including a CU node and a DU node, or a RAN device including a control plane CU node (CU-CP node), a user plane CU node (CU-UP node), and a DU node.

The access network device 120 provides services for a cell, and the terminal device 110 communicates with the access network device 120 through a transmission resource (for example, a frequency domain resource, or a spectrum resource) used by the cell. The cell may be a cell corresponding to the access network device 120 (for example, a base station), and the cell may belong to a macro base station or a base station corresponding to a small cell (small cell). The small cell here may include a metro cell (metro cell), a micro cell (micro cell), a pico cell (pico cell), a femto cell (femto cell), or the like. These small cells have characteristics of small coverage and low transmit power and are applicable to providing high-rate data transmission services.

The core network device 130 is configured to manage one or more access network devices 120. For example, the core network device 130 is configured to transmit, to the access network device 120, information for the access network device to transmit a paging message. For example, the core network device 130 may include at least one of a core network (Core Network, CN) access and mobility management function (access and mobility management function, AMF), a user plane function (user plane function, UPF) network element, a session management function (session management function, SMF) network element, a data network (data network, DN), a unified data repository (unified data repository, UDR), or unified data management (unified data management, UDM).

It should be understood that FIG. 1 illustratively shows one core network device 130, one access network device 120, and one terminal device 110. In some embodiments, the communication system may include other numbers of core network devices, access network devices, or terminal devices, which are not limited in the embodiments of this application.

It should be understood that a device having a communication function in a network/system in the embodiments of this application may be referred to as a communication device. Taking the communication system shown in FIG. 1 as an example, communication devices may include the terminal device 110, the access network device 120, the core network device 130 that have communication functions, which are not limited in the embodiments of this application.

It should be understood that the terms "system" and "network" are usually used interchangeably herein.

In the embodiments of this application, "predefined" may be implemented by pre-storing corresponding code, tables, or other means that can be used to indicate related information in a device (for example, including a terminal device and a network device), and the specific implementation thereof is not limited in this application. For example, predefined may refer to what is defined in a protocol.

In the embodiments of this application, the "protocol" may refer to a standard protocol in the communication field, for example, may include an LTE protocol, an NR protocol, and related protocols applied to future communication systems, which are not limited in this application.

The term "and/or" herein describes only an association relationship between associated objects and indicates that three relationships may exist. For example, A and/or B may indicate the following three cases: Only A exists, both A and B exist, and only B exists. In addition, the character "/" herein generally indicates an "or" relationship between the associated objects.

The terms such as "first", "second", "third", and "fourth" used in the embodiments of this application are intended to distinguish different objects rather than describe a specific order. In addition, the terms "include" and "have" and any variations thereof are intended to cover non-exclusive inclusions.

It should be understood that "indication" mentioned in the embodiments of this application may be a direct indication, an indirect indication, or an association relationship. For example, the expression that A indicates B may mean that A directly indicates B, for example, B may be obtained through A; or the expression may mean that A indirectly indicates B, for example, A indicates C, and B may be obtained through C; or the expression may mean that there is an association relationship between A and B.

In the description of the embodiments of this application, the term "correspondence" may indicate a direct or indirect correspondence between two objects, or an association relationship between two objects, or a relationship of indicating and being indicated, configuring and being configured, or the like.

To facilitate better understanding of the embodiments of this application, related content of a low power wake-up signal (Low Power-Wake up Signal, LP-WUS) in an existing NR system is described.

The 3rd Generation Partnership Project (3rd Generation Partnership Project, 3GPP) will initiate research on the introduction of LP-WUS in mobile cellular systems in Rel-18. To reduce receiving activities of a terminal device in a standby state, so that radio frequency (Radio Frequency, RF) and baseband (modem) modules are truly disabled to greatly reduce power consumption of communication reception, a near "zero" power receiver can be introduced in a receiving module of the terminal device to implement this. This near "zero" power receiver does not require complex RF module signal detection (such as amplification, filtering, and quantization) and modem signal processing, and relies only on passive matched filtering and signal processing with relatively small power consumption. On a base station side, a wake-up signal is triggered on an on-demand (on-demand) basis to enable the near "zero" power receiver to learn of an activation notice, thereby triggering a series of internal procedures of the terminal device, such as enabling radio frequency transceiver and baseband processing modules.

The wake-up signal may be an LP-WUS, which is received through a low power-wake up radio (Low Power-Wake up Radio, LP-WUR). As shown in FIG. 2, a terminal device includes two modules: a first module is a main communication module for transmitting/receiving mobile communication data, and a second module is a low power wake-up reception module for receiving an LP-WUS transmitted by a transmitting end to wake up the main communication module at a receiving end. Optionally, the second module may further receive a low power beacon signal transmitted by the transmitting end to provide time reference information and other information for receiving the low power wake-up signal, and may also provide wake-up link management.

As shown in FIG. 2, in a power-saving state, the terminal device enables the second module to monitor the LP-WUS and disables the first module. The first module remains disabled when not woken up by the second module and does not transmit or receive data. When downlink data arrives, the second module detects the LP-WUS transmitted by the transmitting end, and if the LP-WUS contains information of the terminal device, the second module triggers the first module to switch from the disabled state to an operating state to perform data reception and transmission. The second module may be continuously enabled or discontinuously enabled, and the LP-WUS can be received when the second module is enabled.

FIG. 3 shows a schematic diagram of a basic format (basic format) of an LP-WUS. As shown in FIG. 3, the LP-WUS may include a preamble (preamble) and data. The preamble field may be used for at least one of detection, synchronization, and data rate determination of the LP-WUS; and the data field is used to carry data.

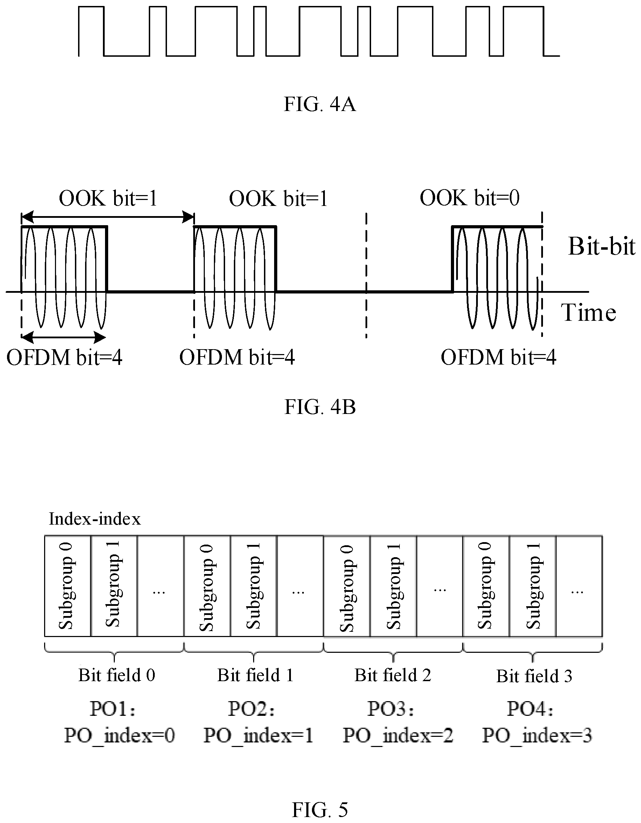

In some embodiments, the LP-WUS may be some relatively simple on-off keying (on-off keying, OOK) signals, so that a receiver may learn of a wake-up notice through a simple energy detection process and a possible subsequent sequence detection process. FIG. 4A shows a schematic diagram of an OOK signal.

As an implementation, an orthogonal frequency division multiplexing (Orthogonal Frequency Division Multiplexing, OFDM) signal modulation scheme may be used to generate the OOK signal, for example, transmission or non-transmission of an OFDM-modulated sequence represents ON/OFF (ON/OFF) in the time domain. The OOK signal can be received using a receiver with lower power consumption, but such receivers exhibit poor reception performance and poor coverage.

Optionally, information may be further carried on ON (ON)-state OFDM-modulated sequences by using different sequences. For example, two sequences respectively represent information 0 and 1, or four signals respectively represent information 00, 01, 10, and 11. As shown in FIG. 4B, part of information is modulated through OOK (where the OOK bit (bit) is 1), and another part of information is carried through an OFDM sequences at the ON level (where the OFDM bit is 4). Since demodulating an OFDM sequence requires a receiver capable of receiving OFDM signals, such receivers generally offer better demodulation performance, that is, better than that of low-power receivers that can only demodulate OOK signals.

To facilitate better understanding of the embodiments of this application, related content of a paging early indication (Paging early indication, PEI) in an existing NR system is described.

For a terminal device in an idle (idle) state, synchronization signal/PBCH block (Synchronization Signal/PBCH Block, SSB) measurement and paging reception need to be performed in each paging (paging) cycle. Paging reception includes the terminal device monitoring the paging physical downlink control channel (Physical Downlink Control Channel, PDCCH) on the paging occasion (Paging Occasion, PO) associated with the terminal device itself, and further receiving the paging physical downlink shared channel (Physical Downlink Shared Channel, PDSCH) after the paging PDCCH is detected. Multiple terminal devices are associated with one PO, so a terminal device may be falsely woken up to monitor the paging PDCCH and paging PDSCH due to another terminal device in the same group being paged. The terminal device will go to sleep only after confirming that the paging PDSCH does not contain a terminal device identifier of the terminal device. As a result, since the terminal device performs monitoring of the paging PDCCH/PDSCH in each paging cycle, and multiple associated terminal devices are in one PO group, the terminal device may be falsely woken up, resulting in unnecessary monitoring power consumption of the terminal device.

To reduce power consumption of the terminal device, R17 standard further introduces PDCCH based (PDCCH based) PEI. The terminal device first receives the PEI before receiving the paging PDCCH, and determines, based on content indicated in the PEI, whether the terminal device itself needs to monitor a subsequent paging PDCCH. If the PEI indicates the terminal device not to receive the paging PDCCH, the terminal device does not need to inspect one or more SSBs between the PEI and the PO subsequently, thereby saving power consumption.

In addition, the PEI has a function of further grouping and indicating multiple terminal devices associated with one PO. For example, the PEI is associated with and indicates one PO, and 8-bit information carried in the PEI is used to further group and indicate multiple terminal devices associated with the PO. By way of example, each bit may correspond to one subgroup (subgroup), that is, the 8 bits may indicate whether 8 subgroups need to monitor a subsequent paging PDCCH. Based on this, the terminal devices associated with one PO may be further divided into 8 subgroups, and PEI indication is performed for each subgroup, which can reduce the false wake-up probability of the terminal devices, thereby reducing paging monitoring power consumption of the terminal devices. By way of example, an indication field of the PEI may be as shown in FIG. 5, where one PEI indicates 4 POs (indexes (index) 0 to 3), and each PO may be divided into a maximum of 8 subgroups (subgroup 0 to subgroup 7).

In addition, two grouping manners are defined for the PEI: one is a grouping manner based on a terminal device identifier (such as UE_ID), and the other is a grouping manner controlled by a CN.

In the grouping manner based on the terminal device identifier, an access network device may group multiple terminal devices. This grouping manner may also be referred to as a grouping manner controlled by the access network device. Optionally, the access network device may group based on identifiers of the terminal devices. Specifically, the access network device may calculate, based on the identifiers of the terminal devices, group identifier IDs (such as group numbers) corresponding to the terminal devices, for example, by performing a modulo operation on the identifier of a terminal device with respect to the number of groups. The terminal devices may also obtain their own group IDs according to the same calculation manner as that for the access network device. Optionally, the terminal device may support, by default, the grouping manner based on the terminal device identifier.

In the grouping manner controlled by the CN, a core network device may group multiple terminal devices corresponding to one PO. The core network device may notify each terminal device of an ID of a group to which the terminal device belongs, and each terminal device may save the group ID allocated by the core network device to the terminal device itself.

When a cell supports both the grouping manner based on the terminal device identifier and the grouping manner controlled by the CN, group IDs (that is, CN group IDs) obtained by the grouping manner controlled by the CN precede group IDs (that is, terminal device identifier group IDs) obtained by the grouping manner based on the terminal device identifier. For example, if there are six terminal groups in a cell, with four groups for the grouping manner based on the terminal device identifier and two groups for the grouping manner controlled by the CN, then, CN group IDs are 0 and 1, and terminal device identifier group IDs are 2, 3, 4, and 5. Therefore, for a terminal device identifier group ID, the result of the modulo operation between the terminal device identifier and the number of groups needs to be added to the number of groups in the grouping manner controlled by the CN. For example, if the modulo operation between the terminal device identifier and the number of groups results in 0, adding the number of groups 2 in the grouping manner controlled by the CN can obtain a terminal device identifier group ID of 2.

Currently, in related technologies, a network side may configure the LP-WUS to reduce power consumption of a terminal device. In a power-saving state, the terminal device enables a low power wake-up reception module to monitor the LP-WUS and disables a main communication module. The main communication module remains disabled when not woken up and does not transmit or receive data. When downlink data arrives, if the low power wake-up reception module in the terminal device receives the LP-WUS, the low power wake-up reception module triggers the main communication module to switch from the disabled state to an operating state to perform data reception and transmission. Since the payload (payload) of the LP-WUS is limited, it is not possible to provide wake-up indication for each terminal device individually. As a result, when an LP-WUS is used to wake up a particular terminal device, multiple terminal devices may be woken up, resulting in a high false wake-up rate of the terminal device. Therefore, in scenarios where the LP-WUS is configured on the network side, how to reduce the false wake-up probability of the terminal device remains an urgent issue to be addressed.

To solve the foregoing technical problem, in the embodiments of this application, the LP-WUS indicates a terminal group to which the terminal device to be woken up belongs, thereby enabling wake-up indication on a group basis for multiple terminal devices. Specifically, a terminal device may determine a group ID of a terminal group to which the terminal device belongs, and receive an LP-WUS from an access network device. The LP-WUS may indicate a target group ID of a target terminal group to be woken up, and the terminal device determines whether it is to be woken up based on its group ID and the target group ID, thereby reducing the false wake-up probability of the terminal device. Terminal devices outside the terminal group corresponding to the target group ID may not be woken up, thereby reducing power consumption of some terminal devices.

The technical solutions of this application are described in detail below through specific embodiments.

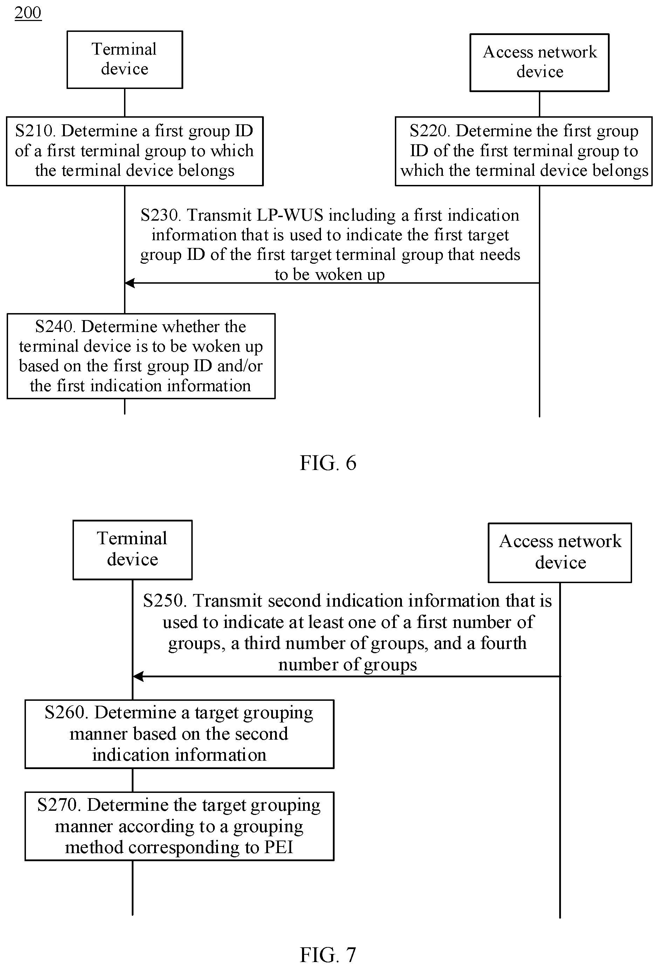

FIG. 6 shows a schematic flowchart of a communication method 200 according to an embodiment of this application. As shown in FIG. 6, the communication method 200 may include at least part of the following steps S210 to S240.

S210. A terminal device determines a first group ID of a first terminal group to which the terminal device belongs.

Specifically, multiple terminal devices in a cell may be divided into multiple terminal groups (that is, subgroups, subgroup), and each terminal group may include at least one terminal device. Optionally, the multiple terminal devices may be multiple terminal devices associated with one PO, which is not limited. Each terminal group may correspond to one group ID, and the group ID may be, for example, a group number of the terminal group, which is not limited in this application. In the embodiments of this application, an LP-WUS may indicate, for each terminal device group, whether the group is to be woken up, so as to reduce the false wake-up rate of the terminal device and further reduce power consumption of the terminal device.

In some embodiments, the terminal device may determine the first group ID according to a target grouping manner. The target grouping manner includes at least one of a first grouping manner based on a terminal device identifier (UE_ID) and a second grouping manner controlled by a core network (CN).

In the first grouping manner, an access network device may group multiple terminal devices. The first grouping manner may also be referred to as a grouping manner controlled by the access network device (RAN). Optionally, the access network device may group based on identifiers of the terminal devices. Specifically, the access network device may calculate, based on the identifiers of the terminal devices, group identifier IDs (such as group numbers) corresponding to the terminal devices, for example, by performing a modulo operation on the identifier of a terminal device with respect to the number of groups. The terminal devices may also obtain their own group IDs according to the same calculation manner as that for the access network device. Optionally, the terminal device may support, by default, the first grouping manner.

Optionally, a group obtained according to the first grouping manner may also be referred to as a RAN group, a terminal device identifier group, a UE_ID group, or the like, which is not limited in this application.

In the second grouping manner, a core network device may group multiple terminal devices corresponding to one PO. The core network device may notify each terminal device of an ID of a group to which the terminal device belongs, and each terminal device may save the group ID allocated by the core network device to the terminal device itself. Optionally, the core network device may further notify the access network device of the ID of the group to which the terminal device belongs.

Optionally, a group obtained according to the second grouping manner may also be referred to as a CN group, which is not limited in this application.

Optionally, the target grouping manner may include the following three cases:

case 1: The target grouping manner includes only the first grouping manner and does not include the second grouping manner;
case 2: The target grouping manner includes the first grouping manner and the second grouping manner; and
case 3: The target grouping manner includes only the second grouping manner and does not include the first grouping manner.

It should be noted that the target grouping manner includes the first grouping manner including two cases, that is, the foregoing case 1 and case 2; the target grouping manner includes the second grouping manner including two cases, that is, case 2 and case 3 described above.

By way of example, case 1 and case 2 are applicable to a scenario in which an access network device supports the first grouping manner, or the access network device can provide the terminal device with configuration information corresponding to the first grouping manner. In this scenario, the access network device may further support the second grouping manner or not support the second grouping manner, which is not limited. Optionally, the configuration information corresponding to the first grouping manner may include at least one of the number of groups according to the first grouping manner for the LP-WUS, the number of groups corresponding to the LP-WUS, and a broadcast parameter used to determine a group ID of the terminal device, which is not limited in this application.

By way of example, case 3 is applicable to a scenario in which an access network device supports only the second grouping manner, or the access network device does not support the first grouping manner, or the access network device does not provide configuration information corresponding to the first grouping manner.

In some embodiments, when the target grouping manner includes the first grouping manner, the first group ID may be determined based on a first terminal device identifier of the terminal device and a first number of groups; where the first number of groups may be a maximum number of groups, corresponding to the LP-WUS, that is determined according to the first grouping manner, or the number of groups, corresponding to the LP-WUS, that is determined according to the first grouping manner, or the number of groups corresponding to the LP-WUS, or the number of bits corresponding to first indication information in the LP-WUS.

By way of example, the first number of groups may be represented as Y. In the foregoing case 1 and case 2, Y may be the number of groups, corresponding to the LP-WUS, that is determined according to the first grouping manner, or a maximum number of groups, corresponding to the LP-WUS, that is determined according to the first grouping manner, and the two may be equivalent descriptions.

It should be noted that in some embodiments of this application, the number of groups and the maximum number of groups may represent the same or similar meanings, and in some implementations, the two may be interchanged. For example, the first number of groups may be replaced with a first maximum number of groups, a second number of groups may be replaced with a second maximum number of groups, a third number of groups may be replaced with a third maximum number of groups, a fourth number of groups may be replaced with a fourth maximum number of groups, and the like, which is not limited in this application.

Optionally, in the foregoing case 1, the first number of groups Y is the number of groups corresponding to the LP-WUS, and in this case, the number of groups, corresponding to the LP-WUS, that is determined according to the second grouping manner is 0.

Optionally, in the foregoing case 1, the first number of groups Y may be the number of bits M corresponding to first indication information in the LP-WUS. The first indication information is used for grouping, and each of the M bits of the first indication information corresponds to one terminal group and is used to indicate whether terminal devices in the corresponding terminal group need to be woken up. Alternatively, each of the M bits of the first indication information corresponds to a group ID of one terminal group and is used to indicate whether terminal devices in the terminal group corresponding to the corresponding group ID need to be woken up. In this case, Y=M.

For example, when the number of bits M corresponding to the first indication information is 8, the first number of groups Y may be 8, and each of the 8 bits in the first indication information corresponds to one terminal group (group ID) and is used to indicate whether terminal devices in the corresponding terminal group need to be woken up.

In some embodiments, for the foregoing case 1, that is, when the target grouping manner includes only the first grouping manner and does not include the second grouping manner, the first group ID may be determined based on the first terminal device identifier of the terminal device and the first number of groups.

By way of example, a group ID corresponding to the terminal device may be obtained by performing a modulo operation on the first terminal device identifier P of the terminal device with respect to the first number of groups Y, which may be specifically represented by the following formula:

$$SubgroupID = P \bmod Y \qquad (1)$$

where SubgroupID represents the group ID.

In some embodiments, for the foregoing case 2, that is, when the target grouping manner includes the first grouping manner and the second grouping manner, the first group ID may be determined based on the first terminal device identifier of the terminal device, the first number of groups, and a group ID start value corresponding to the first grouping manner.

By way of example, a group ID corresponding to the terminal device may be determined by performing a modulo operation on the first terminal device identifier P of the terminal device with the first number of groups Y, and adding a result of the operation to the group ID start value S, which may be specifically represented by the following formula:

$$SubgroupID = P \bmod Y + S \qquad (2)$$

Optionally, the group ID start value may be determined based on the number of groups, corresponding to the LP-WUS, that is determined according to the second grouping manner. The number of groups, corresponding to the LP-WUS, that is determined according to the second grouping manner is, for example, the number of CN groups. For example, when the number of groups according to the second grouping manner (that is, the number of CN groups) corresponding to the LP-WUS is 2, S=2. In this way, a CN group ID corresponding to the LP-WUS can be arranged before a terminal device identifier group ID corresponding to the LP-WUS.

For example, multiple terminal devices in a cell are divided into a total of 6 terminal groups, a group corresponding to the first grouping manner (a RAN group or a terminal device identifier group) occupies 4 groups, and a group corresponding to the second grouping manner (a CN group) occupies 2 groups. Then, CN group IDs may be 0 and 1, and terminal device identifier group IDs may be 2, 3, 4, and 5. In this case, a terminal device identifier group ID is obtained by performing a modulo operation on the first terminal device identifier with respect to the first number of groups and then adding the modulo result to the number of CN groups (S=2), that is, a group ID according to the first grouping manner.

In an embodiment, when there is no group corresponding to the second grouping manner (that is, no CN group), S=0, and in this case, formula (2) is simplified to formula (1).

It should be noted that when group IDs start from 0, the group ID of the terminal group to which the terminal device belongs may be directly obtained according to the foregoing formula (1) or formula (2). When group IDs start from 1, 1 may be added to a calculation result of the foregoing formula (1) or formula (2) to obtain the group ID of the terminal group to which the terminal device belongs.

In some embodiments, in the method 200, a second terminal device identifier of the terminal device may further be determined based on a mobile subscriber identifier of the terminal device and a first parameter X; and the first terminal device identifier is determined based on the second terminal device identifier and a second parameter.

By way of example, the mobile subscriber identifier may be a globally unique identifier allocated by a communication system to the terminal device, and may be used to uniquely identify the terminal device. As an example, the mobile subscriber identifier may be a 5G globally unique temporary UE identity (5G Global Unique Temporary UE Identity, 5G-GUTI), or a 5G temporary mobile subscription identifier (Temporary Mobile Subscription Identifier, TMSI), or 5G-S-TMSI, or the like, which is not limited.

Specifically, the second terminal device identifier UE_ID may be obtained by performing a modulo operation on the mobile subscriber identifier of the terminal device with respect to the first parameter X. Taking the mobile subscriber identifier being 5G-S-TMSI as an example, the second terminal device identifier UE_ID may be represented as: 5G-S-TMSI mod X. Here, the second terminal device identifier UE_ID may be a part of the mobile subscriber identifier used for the LP-WUS to determine a group ID according to the first grouping manner.

Optionally, the number of bits of the second terminal device identifier UE_ID is $log_2 Y$, where Y is the foregoing first number of groups.

For example, when the first number of groups Y is 8, the number of bits of the second terminal device identifier UE_ID is 3. That is, by performing a modulo operation on the mobile subscriber identifier of the terminal device with respect to the first parameter X, 3 bits of the mobile subscriber identifier can be obtained as the foregoing second terminal device identifier UE_ID.

In some embodiments, the first parameter X may be determined in one of the following manner 1 and manner 2.

Manner 1: In a non-extended discontinuous reception (Extended Discontinuous Reception, eDRX) scenario, the first parameter X is a product of 8192 and the first number of groups; or in an eDRX scenario, the first parameter X is a product of 32798 and the first number of groups.

Specifically, in the grouping manner for the PEI based on a terminal device identifier (UE_ID), the partial UE_ID used to determine a group ID according to the grouping manner for the PEI based on the terminal device identifier may be determined based on 5G-S-TMSI mod X'. To make the foregoing second terminal device identifier UE_ID different from the partial UE_ID used to determine a group ID according to the grouping manner for the PEI based on the terminal device identifier, the foregoing first parameter X may be obtained based on a product of X' and the first number of groups Y. Since the protocol has defined that X'=8192 in a non-eDRX scenario and X'=32768 in an eDRX scenario, based on this, it may be determined that in the eDRX scenario, the first parameter X is 8192*Y; and in the eDRX scenario, the first parameter X is 32798*Y.

As a specific example, if the first number of groups is 8, then in the non-eDRX scenario, X=65536; and in the eDRX scenario, X=262144.

By making the second terminal device identifier UE_ID different from the partial UE_ID used to determine a group ID according to the grouping manner for the PEI based on the terminal device identifier, a terminal group corresponding to the LP-WUS of the terminal device can be made different from a terminal group corresponding to the PEI, and the dependency relationship between a terminal group corresponding to the LP-WUS and a terminal group corresponding to the PEI can be dispersed as much as possible, so that the two groupings are independent of each other, thereby allowing diversity gain for improving false wake-up reduction performance through different terminal groups.

Manner 2: In an eDRX scenario, the first parameter X is a product of 1024 and the first number of groups; or in an eDRX scenario, the first parameter X is a product of 4096 and the first number of groups.

Specifically, to make the foregoing second terminal device identifier UE_ID the same as or partially overlap with the partial UE_ID used to determine a group ID according to the grouping manner for the PEI based on the terminal device identifier, the first parameter X may be defined as a product of 1024 and the first number of groups in the non-eDRX scenario, that is, 1024*Y; and as a product of 4096 and the first number of groups in the eDRX scenario, that is, 4096*Y.

As a specific example, if the first number of groups is 8, then in the non-eDRX scenario, X=8192; and in the eDRX scenario, X=32678. In this case, the second terminal device identifier UE_ID is completely the same as the partial UE_ID used to determine a group ID according to the grouping manner for the PEI based on the terminal device identifier.

By making the second terminal device identifier UE_ID the same as or partially overlap with the partial UE_ID used to determine a group ID according to the grouping manner for the PEI based on the terminal device identifier, a terminal group corresponding to the LP-WUS of the terminal device can be made the same as or partially the same as a terminal group corresponding to the PEI, thereby avoiding exposure of additional UE_ID information and preventing potential security issues.

In some embodiments, the second parameter may include a second number of groups, which may be represented as Np, for example. The second number of groups may be a maximum number of groups that is determined according to the grouping manner for the PEI based on a terminal device identifier, or the number of groups that is determined according to the grouping manner for the PEI based on a terminal device identifier, or the number of groups corresponding to the PEI, or a base-2 logarithm of the maximum number of groups that is determined according to the grouping manner for the PEI based on a terminal device identifier, or a base-2 logarithm of the number of groups that is determined according to the grouping manner for the PEI based on a terminal device identifier, or a base-2 logarithm of the number of groups corresponding to the PEI.

In some embodiments, the second parameter may include a second number of groups, which may be represented as Np, for example. The second number of groups satisfies at least one of the following:

when a network has configured PEI or PEI grouping, or a terminal device is operating under PEI, the second number of groups is a maximum number of groups, corresponding to the PEI, that is determined according to the first grouping manner, or the number of groups, corresponding to the PEI, that is determined according to the first grouping manner, or the number of groups corresponding to the PEI, or a base-2 logarithm of the maximum number of groups, corresponding to the paging early indication PEI, that is determined according to the first grouping manner, or a base-2 logarithm of the number of groups, corresponding to the PEI, that is determined according to the first grouping manner, or a base-2 logarithm of the number of groups corresponding to the PEI; and

when a network has not configured PEI or PEI grouping, or the terminal device does not support PEI or is not operating under PEI, the second number of groups is 1.

Optionally, since the principle of grouping according to the grouping manner based on a terminal device identifier corresponding to the PEI is the same as or similar to that according to the grouping manner based on a terminal device identifier corresponding to the LP-WUS, the grouping manner based on a terminal device identifier corresponding to the PEI may also be referred to as the first grouping manner. Optionally, since the principle of grouping according to the grouping manner controlled by a CN corresponding to the PEI is the same as or similar to that according to the grouping manner controlled by a CN corresponding to the LP-WUS, the grouping manner controlled by a CN corresponding to the PEI may also be referred to as the second grouping manner. In some implementations, the second number of groups Np in the second parameter may be the first number of groups itself, or a base-2 logarithm of the first number of groups (that is, $\log_2$(first number of groups)), which is not limited in this application. For example, when the second number of groups is 8, the first number of groups Np in the second parameter may be 8 or 3. In some implementations, if the network has configured PEI or PEI grouping, or if a terminal is operating under PEI, the second number of groups in the second parameter may be: the first number of groups itself, or a base-2 logarithm of the first number of groups (that is, $\log_2$(first number of groups)). For example, when the second number of groups is 8, the first number of groups Np in the second parameter may be 8 or 3. If the network has not configured PEI or PEI grouping, or if the terminal does not support PEI or is not operating under PEI, the second number of groups in the second parameter may be 1.

Since the second number of groups is not used in determining a group ID according to the grouping manner for the PEI based on the terminal device identifier, including the second number of groups in the second parameter can make a terminal group corresponding to the LP-WUS of the terminal device different from a terminal group corresponding to the PEI, and the dependency relationship between the terminal group corresponding to the LP-WUS and the terminal group corresponding to the PEI is dispersed as much as possible, making the two groupings independent of each other, and thereby allowing diversity gain for improving false wake-up reduction performance through different terminal groups.

In some embodiments, the second parameter may be determined based on either solution 1 or solution 2 below. Solution 1 and solution 2 correspond to two solutions for determining a group ID of a terminal group to which a terminal device belongs when the target grouping manner includes the first grouping manner.

Solution 1: The second parameter is determined according to a total number N of paging frames (paging frames) in a cycle T and a number Ns of POs in one PF. In this case, the second parameter may include N and Ns.

By way of example, the first terminal device identifier P in the foregoing formula (1) and formula (2) may be represented by the following formula (3):

$$P=floor(UE\_ID/(N*Ns)) \qquad (3)$$

where UE_ID represents the foregoing second terminal device identifier.

It should be noted that formula (3) in solution 1 may also be used to determine a group ID according to the first grouping manner for the PEI.

Optionally, solution 1 may be applicable to a scenario in which a network-side device (such as an access network device) provides only configuration information corresponding to the first grouping manner of the LP-WUS, or the terminal device uses only the LP-WUS to control whether to monitor a paging message (that is, does not use the PEI to control whether to monitor a paging message).

Solution 2: The second parameter is determined according to the total number N of paging frames in a cycle, the number Ns of POs in one PF, and the second number of groups Np. In this case, the second parameter may include N, Ns, and Np.

By way of example, the first terminal device identifier P in the foregoing formula (1) and formula (2) may be represented by the following formula (4):

$$P=floor(UE\_ID/(N\mathit{Ns}Np)) \qquad (4)$$

It should be noted that formula (4) is a solution provided in the embodiments of this application for determining a group ID according to the first grouping manner for the LP-WUS, and is different from a solution in related technologies for determining a group ID according to the first grouping manner for the PEI.

Optionally, solution 2 may be applicable to a scenario in which a network-side device (such as an access network device) provides configuration information corresponding to the first grouping manner for each of the LP-WUS and the PEI, or the terminal device uses both the LP-WUS and the PEI to control whether to monitor a paging message.

In the foregoing solution 1 and solution 2, the parameters N and Ns may be configured by a network-side device. For example, an access network device may broadcast system information that includes the parameters N and Ns.

It should further be noted that in both solution 1 and solution 2, the foregoing manner 1 or manner 2 may be used to obtain the first parameter X to determine a terminal group (group ID) to which the terminal device belongs.

When manner 1 is used in solution 1 to determine the first parameter, since the second terminal device identifier UE_ID is different from the partial UE_ID used to determine a group ID according to the grouping manner for the PEI based on the terminal device identifier, even if the same formula (3) as that for the PEI is used to determine a terminal group to which the terminal device belongs, an obtained group ID corresponding to the LP-WUS is different from a group ID corresponding to the PEI, which can disperse a dependency relationship between the terminal group corresponding to the LP-WUS and the terminal group corresponding to the PEI, make the two groupings independent of each other, and thereby allow diversity gain for improving the false wake-up reduction performance through different terminal groups.

When manner 1 or manner 2 is used in solution 2 to determine the first parameter, since the second parameter (for example, including N, Ns, and Np) is different from a parameter (such as N and Ns) used for determining a group ID according to the first grouping manner for the PEI, that is, a formula (4) different from that for the PEI is used to determine a terminal group to which the terminal device belongs, regardless of whether the second terminal device identifier UE_ID is the same as the partial UE_ID used to determine a group ID according to the grouping manner for the PEI based on the terminal device identifier, an obtained group ID corresponding to the LP-WUS is inevitably different from a group ID corresponding to the PEI, which can disperse the dependency relationship between the terminal group corresponding to the LP-WUS and the terminal group corresponding to the PEI, making the two groupings independent of each other, and thereby allowing diversity gain for improving false wake-up reduction performance through different terminal groups.

In a case that a group ID corresponding to the LP-WUS is different from a group ID corresponding to the PEI, the terminal device may further receive a PEI from a network-side device, where the PEI includes indication information used to indicate a second target group ID of a second target terminal group that needs to receive a paging message.

Since the group ID corresponding to the LP-WUS is different from the group ID corresponding to the PEI, the terminal device further receives the PEI after being woken up to determine whether to receive a paging message, thereby obtaining diversity gain for reducing false wake-up of paging.

When manner 2 is used in solution 1 to determine the first parameter, since the second terminal device identifier UE_ID is the same as or partially overlaps with a partial UE_ID used to determine a group ID according to the first grouping manner for the PEI, and the same formula (3) as that for the PEI is used to determine a terminal group to which the terminal device belongs, an obtained group ID corresponding to the LP-WUS is the same as or partially overlaps with a group ID corresponding to the PEI, that is, a terminal group corresponding to the LP-WUS is the same as or partially the same as a terminal group corresponding to the PEI.

Optionally, in a case that a terminal group corresponding to the LP-WUS is the same as or partially the same as a terminal group corresponding to the PEI, the terminal device may further determine not to receive a PEI. The PEI includes indication information used to indicate a second target group ID of a second target terminal group that needs to receive a paging message. Optionally, even if a network-side device has configured configuration information for grouping based on a terminal device identifier for the PEI, the terminal device may determine not to receive the PEI.

Since the group ID corresponding to the LP-WUS is the same as the group ID corresponding to the PEI, the grouping-based wake-up indication function by the PEI can be achieved by waking up based on the group ID indicated by the LP-WUS, and the terminal device does not need to detect the PEI subsequently, which helps reduce power consumption of the terminal device.

Optionally, in a case that a terminal group corresponding to the LP-WUS is the same as or partially the same as a terminal group corresponding to the PEI, the terminal device may further receive a PEI from a network-side device, where the PEI includes indication information used to indicate a second target group ID of a second target terminal group that needs to receive a paging message.

It should be noted that when the target grouping manner includes the first grouping manner, if a network-side device (such as an access network device) has configured only corresponding configuration information of the LP-WUS, or the terminal device uses only the LP-WUS to control whether to monitor a paging message (that is, does not use the PEI to control whether to monitor a paging message), or a network-side device has configured corresponding configuration information of both the LP-WUS and the PEI, or the terminal device uses both the LP-WUS and the PEI to control whether to monitor a paging message, the terminal device may use a corresponding grouping solution in the foregoing solution 1 or solution 2 to determine the first group ID of the first terminal group to which the terminal device belongs.

In some embodiments, when the target grouping manner includes the second grouping manner, a message including the first group ID may be received from a core network device to determine the first group ID of the first terminal group to which the terminal device belongs. Optionally, the message may include a non-access stratum (Non-access stratum, NAS) message.

Optionally, the terminal device may further transmit grouping capability information to a network-side device, where the grouping capability information is used to indicate that the terminal device supports the second grouping manner, or indicate that the terminal device supports LP-WUS grouping, or indicate that the terminal device supports wake-up based on the LP-WUS.

By way of example, the network-side device includes at least one of an access network device and a core network device. Optionally, when the terminal device reports grouping capability information to the access network device, the access network device may further report the grouping capability information to the core network device. When the core network device determines that the terminal device supports the second grouping manner, or supports LP-WUS grouping, or supports wake-up based on the LP-WUS, the core network device may transmit a message (such as an NAS message) to the terminal device to indicate a group ID of the terminal device according to the second grouping manner, that is, the foregoing first group ID.

Optionally, in a case that the terminal device receives the first group ID from the core network device, the terminal device may further determine not to receive the PEI, or receive the PEI from a network-side device, which is not limited. When the terminal device determines not to receive the PEI, the terminal device may monitor the LP-WUS to determine whether it is to be woken up; when the terminal device receives the PEI, the terminal device may monitor the LP-WUS and the PEI to determine whether it is to be woken up.

In some embodiments, the first group ID may be determined based on a group ID corresponding to a PEI, of a terminal group to which the terminal device belongs. By way of example, the first group ID is the same as a group ID of a terminal group determined according to at least one of the first grouping manner and the second grouping manner corresponding to the PEI.

As one implementation, when the target grouping manner includes the first grouping manner, the terminal device may use a terminal device identifier group ID of the PEI (that is, a group ID corresponding to the first grouping manner) as the foregoing first group ID.

Specifically, in related technologies, a group ID of a terminal group to which the terminal device belongs, obtained according to the first grouping manner for the PEI, may be used as a group ID of a terminal group to which the terminal device belongs according to the first grouping manner for the LP-WUS.

In some embodiments, when the terminal does not support using a PEI to control whether to monitor a paging message (and there is no corresponding configuration, such as the number of groups based on a terminal device identifier), the first group ID of the first terminal group to which the terminal device belongs may be determined according to the foregoing solution 1 or solution 2.

Optionally, in a case that the terminal device uses a terminal device identifier group ID corresponding to the PEI as the foregoing first group ID, the terminal device may further determine not to receive a PEI. Optionally, even if a network-side device has configured configuration information corresponding to the first grouping manner for the PEI, the terminal device may determine not to receive the PEI.

As another implementation, when the target grouping manner includes the second grouping manner, the foregoing first group ID may be determined according to a CN group ID corresponding to the PEI (that is, a group ID corresponding to the second grouping manner).

Specifically, in related technologies, a group ID of a terminal group to which the terminal device belongs, obtained according to the second grouping manner for the PEI, may be used as a group ID of a terminal group to which the terminal device belongs according to the second grouping manner for the LP-WUS.

In some embodiments, when the terminal does not support using a PEI to control whether to monitor a paging message, but a core network device has configured a CN group ID corresponding to the PEI, the terminal device may still determine the foregoing first group ID according to the CN group ID corresponding to the PEI.

Optionally, in a case that the terminal device uses a group ID, corresponding to the PEI, that is determined according to the second grouping manner as the foregoing first group ID, the terminal device may further determine not to receive a PEI. Optionally, even if the core network device has configured a corresponding CN group ID for the PEI, the terminal device may still determine not to receive the PEI.

S220. An access network device determines a first group identifier ID of a first terminal group to which a terminal device belongs.

Specifically, the access network device may determine, in the same manner as the terminal device, a first group ID of a first terminal group to which terminal devices belong. Here, the terminal devices may be all terminal devices in a cell, or terminal devices to be woken up in a cell, or all terminal devices associated with one PO, or terminal devices to be woken up and associated with one PO, which is not limited in this application.

Specifically, a process of determining the first group ID is similar to step 210. For details, reference may be made to related description in step S210.

It should be noted that for one terminal device, a manner in which the access network device determines a group ID of a terminal group to which the terminal device belongs is the same as a manner in which the terminal device itself determines a group ID of a terminal group to which the terminal device belongs. Correspondingly, a group ID corresponding to the terminal device determined by the access network device is the same as a group ID of a terminal group to which the terminal device belongs, determined by the terminal device itself.

For example, when the terminal device determines the first group ID according to the first grouping manner, the access network device also determines the first group ID according to the first grouping manner; when the terminal device determines the first group ID according to the second grouping manner, the access network device also determines the first group ID according to the second grouping manner; when the terminal device determines the first group ID based on a group ID corresponding to a PEI, of a terminal group to which the terminal device belongs, the access network device also determines the first group ID based on the group ID corresponding to the PEI, of the terminal group to which the terminal device belongs, thereby ensuring that the access network device and the terminal device correspond to the same terminal group.

S230. An access network device transmits an LP-WUS, where the LP-WUS includes first indication information, the first indication information being used to indicate a first target group ID of a first target terminal group to be woken up, or the LP-WUS corresponds to the first target group ID of the first target terminal group to be woken up, for example, the LP-WUS may be a sequence (sequence), and the LP-WUS sequence corresponds to the first target group ID of the first target terminal group to be woken up. Correspondingly, the terminal device receives the LP-WUS from the access network device.

By way of example, when the target grouping manner includes the first grouping manner, in waking up a terminal device by the access network device, the first indication information in the LP-WUS may indicate a group ID corresponding to the terminal device (that is, the first target group ID) in order to wake up the terminal device. When the target grouping manner includes the second grouping manner, the access network device may receive a group ID of a terminal device to be woken up from a core network device, and the first indication information in the LP-WUS may indicate a group ID corresponding to the terminal device (that is, the first target group ID) in order to wake up the terminal device. Correspondingly, terminal devices in the first target terminal group corresponding to the first target group ID are all woken up, and terminal devices in a terminal group corresponding to other terminal group IDs may not be woken up, thereby saving power consumption of some terminal devices.

The first target terminal group may include one or more terminal groups, and the first target group ID may include one or more group IDs, which is not limited in this application.

In some embodiments, the number of bits of the first indication information is determined according to the number of groups corresponding to the LP-WUS.

As an implementation, the number of bits of the first indication information is the same as the number of groups corresponding to the LP-WUS, so that each bit in the first indication information corresponds to one terminal group (or a group ID of the terminal group) and is used to indicate whether terminal devices in the corresponding terminal group are to be woken up.

For example, it is assumed that group IDs start from 0. When the number of groups or a maximum number of groups corresponding to the LP-WUS is 8, the first indication information may include 8 bits, the first one of the 8 bits is used to indicate whether terminal devices in a terminal group whose group ID is 0 are to be woken up, the second bit is used to indicate whether terminal devices in a terminal group whose group ID is 1 are to be woken up, and so on, and the eighth bit is used to indicate whether terminal devices in a terminal group whose group ID is 7 are to be woken up.

As an example, a bit value of 1 in the first indication information may indicate that terminal devices in a corresponding terminal group are to be woken up, and a bit value of 0 may indicate that terminal devices in a corresponding terminal group are not to be woken up. Alternatively, conversely, a bit value of 0 may indicate that terminal devices in a corresponding terminal group are to be woken up, and a bit value of 1 may indicate that terminal devices in a corresponding terminal group are not to be woken up.

As another implementation, the number of bits of the first indication information is a base-2 logarithm of the number of groups corresponding to the LP-WUS. If the number of bits of the first indication information is M and the number of groups corresponding to the LP-WUS is Y, $M = \log_2 Y$. In this way, the first indication information may be used to indicate a group ID of a target terminal group to be woken up.

For example, it is assumed that group IDs start from 0. When the number of groups corresponding to the LP-WUS is 8, the first indication information may include 3 bits. When the first indication information is 000, it may be used to indicate that terminal devices in a terminal group whose group ID is 0 are to be woken up (while terminal devices in other terminal groups are not to be woken up). When the first indication information is 001, it may be used to indicate that terminal devices in a terminal group whose group ID is 1 are to be woken up (while terminal devices in other terminal groups are not to be woken up), and so on. When the first indication information is 111, it may be used to indicate that terminal devices in a terminal group whose group ID is 7 are to be woken up (while terminal devices in other terminal groups are not to be woken up), and so on.

Optionally, the number of bits M of the first indication information is a positive integer greater than or equal to 1, for example, M=2, 4, 6, 8, 16, ..., which is not limited in this application.

In some embodiments, a network-side device may indicate the number of bits of the first indication information to the terminal device through at least one of the following messages: system information (system information, SI), a low power synchronization signal LP-SS, a preamble part of the LP-WUS, or a radio resource control (Radio Resource Control, RRC) release message, or a NAS message.

When the number of bits of the first indication information is indicated to the terminal device through an SI, an LP-SS, a preamble part of the LP-WUS, or an RRC release message, the network-side device may be an access network device. When the number of bits of the first indication information is indicated to the terminal device through a NAS message, the network-side device may be a core network device.

In some embodiments, the number of bits of the first indication information carried in the LP-WUS is predefined by a protocol, which is not limited in this application.

S240. The terminal device determines, based on the first group ID and the first indication information, whether the terminal device is to be woken up.

As an implementation, in a case that the first target group ID includes the first group ID, it is determined that the terminal device is to be woken up.

Specifically, the first target group ID is a group ID of the first target terminal group to be woken up. When the number of bits of the first indication information is the same as the number of groups corresponding to the LP-WUS, the first target group ID is a group ID of a terminal group corresponding to a bit that is used to indicate wake-up of a terminal group in the first indication information, and the number of first target group IDs may be one or more. When the number of bits of the first indication information is a base-2 logarithm of the number of groups corresponding to the LP-WUS, the first target group ID is a group ID of a to-be-woken-up terminal group indicated by the first indication information, and the number of first target group IDs is one. When the first target group ID includes the first group ID of the first terminal group to which the terminal device belongs, it is determined that the terminal group to which the terminal device belongs is to be woken up, and in this case, the terminal device is woken up. Optionally, terminal devices having the same group ID as the terminal device are also woken up.

Conversely, in a case that the first target group ID does not include the first group ID, it is determined that the terminal device is not to be woken up.

Specifically, when the first target group ID does not include the first group ID, the terminal group to which the terminal device belongs is not to be woken up, and in this case, the terminal device is not to be woken up.

As another implementation, in a case that the first target terminal group includes the terminal device, it is determined that the terminal device is to be woken up. Specifically, when a first target terminal group corresponding to a first target group ID indicated by the first indication information includes the terminal device, the first target group ID includes the first group ID of the terminal device, and in this case, it may be determined that the terminal device is to be woken up.

Conversely, in a case that the first target terminal group does not include the terminal device, it is determined that the terminal device is not to be woken up.

In some embodiments, the determining whether the terminal device is to be woken up includes at least one of the following:

    determining whether the terminal device is to receive a paging message;
    determining whether the terminal device is to receive a PEI;
    determining whether the terminal device is to exit a low power sleep mode;
    determining whether the terminal device is to monitor a PDCCH;
    determining whether the terminal device is to transmit/receive a signal through a main receiver;
    determining whether the terminal device is to receive system information; and
determining whether the terminal device is to perform random access.

That is, when the terminal device is woken up, the terminal device may perform at least one of receiving a paging message, receiving a PEI, exiting a low power sleep mode, monitoring a PDCCH, transmitting/receiving a signal through a main receiver, receiving system information, and performing random access.

Optionally, that the terminal device monitors a PDCCH means that the terminal device monitors the PDCCH through a main receiver. By way of example, the main receiver may be a main communication module, which is not limited.

Optionally, after being woken up, the terminal device may further receive a PEI from a network-side device (such as an access network device), where the PEI includes indication information used to indicate a second target group ID of a second target terminal group that needs to receive a paging message. In this case, the terminal device may further determine a second group ID of a second terminal group to which the terminal device belongs, and determine, based on the second group ID and the second target group ID thereof, whether to receive a paging message.

If a terminal group corresponding to the LP-WUS of the terminal device is different from a terminal group corresponding to the PEI, the second target terminal group is different from the first target terminal group, or the second target group ID is different from the first target group ID. Therefore, the embodiments of this application can disperse the dependency relationship between the terminal group corresponding to the LP-WUS and the terminal group corresponding to the PEI, making the two groupings independent of each other, and thereby allowing diversity gain for improving false wake-up reduction performance through different terminal groups.

Therefore, in the embodiments of this application, a terminal device determines a group ID of a terminal group to which the terminal device belongs, receives an LP-WUS from an access network device, and then determines whether it is to be woken up based on the group ID and a target group ID of a target terminal group to be woken up as indicated by the LP-WUS, thereby enabling wake-up indication on a group basis for a plurality of terminal devices to reduce the false wake-up probability of the terminal devices. Terminal devices outside the terminal group corresponding to the target group ID may not be woken up, thereby saving power consumption of some terminal device.

In some embodiments, referring to FIG. 7, the method 200 may further include step S250.

S250. An access network device transmits second indication information to a terminal device, where the second indication information is used to indicate at least one of a first number of groups, a third number of groups, and a fourth number of groups. Correspondingly, the terminal device receives the second indication information.

The first number of groups includes a maximum number of groups, corresponding to the LP-WUS, that is determined according to the first grouping manner, or the number of groups, corresponding to the LP-WUS, that is determined according to the first grouping manner, or a base-2 logarithm of the maximum number of groups, corresponding to the LP-WUS, that is determined according to the first grouping manner, or a base-2 logarithm of the number of groups, corresponding to the LP-WUS, that is determined according to the first grouping manner. For details about the first number of groups, reference may be made to related description above.

The third number of groups includes a maximum number of groups, corresponding to the LP-WUS, that is determined according to the second grouping manner, or the number of groups, corresponding to the LP-WUS, that is determined according to the second grouping manner, or a base-2 logarithm of the maximum number of groups, corresponding to the LP-WUS, that is determined according to the second grouping manner, or a base-2 logarithm of the number of groups, corresponding to the LP-WUS, that is determined according to the second grouping manner. The maximum number of groups, corresponding to the LP-WUS, that is determined according to the second grouping manner and the number of groups, corresponding to the LP-WUS, that is determined according to the second grouping manner may be equivalent descriptions.

The fourth number of groups includes the number of groups corresponding to the LP-WUS, or the number of bits corresponding to first indication information in the LP-WUS, or the number of bits used to indicate a first target terminal group in the LP-WUS, or a base-2 logarithm of the number of groups corresponding to the LP-WUS, or a value obtained by taking 2 as the base and the number of bits of the first indication information in the LP-WUS as an exponent, or a value obtained by taking 2 as the base and the number of bits used to indicate the first target terminal group in the LP-WUS as an exponent.

Optionally, when each bit of the first indication information in the LP-WUS corresponds to one terminal group (or group ID), the number of bits of the first indication information is the same as the number of groups corresponding to the LP-WUS. Optionally, bits used for the first target terminal group in the LP-WUS are bits of the first indication information, and therefore the number of bits used for the first target terminal group in the LP-WUS is equal to the number of bits of the first indication information.

In some embodiments, the second indication information may be carried in at least one of the following messages:

system information (system information, SI), a low power synchronization signal LP-SS, a preamble part of the LP-WUS, or a radio resource control (Radio Resource Control, RRC) release message.

Optionally, configuration information of the LP-WUS provided by the access network device for the terminal device may include the second indication information. Correspondingly, the terminal device may determine a group ID of the terminal device based on the second indication information.

Optionally, the method 200 may further include step S260.

S260. The terminal device determines a target grouping manner based on the second indication information.

Specifically, the terminal device may determine the target grouping manner based on at least one of the first number of groups, the third number of groups, and the fourth number of groups configured in the second indication information.

As an implementation, in a case that the second indication information includes the third number of groups, the target grouping manner includes the second grouping manner.

That is, if the access network device has configured the number of groups (or a maximum number of groups), corresponding to the LP-WUS, that is determined according to the second grouping manner, the terminal device may determine that groups corresponding to the LP-WUS include groups according to the second grouping manner (that is, CN groups).

As another implementation, in a case that the second indication information includes the first number of groups, the target grouping manner includes the first grouping manner.

That is, if the access network device has configured the number of groups (a maximum number of groups), corresponding to the LP-WUS, that is determined according to the first grouping manner, the terminal device may determine that groups corresponding to the LP-WUS include groups according to the first grouping manner (that is, groups based on a terminal device identifier).

As another implementation, in a case that the second indication information does not include the first number of groups or that the first number of groups is 0, the target grouping manner includes the second grouping manner.

That is, if the access network device has not configured the number of groups (a maximum number of groups), corresponding to the LP-WUS, that is determined according to the first grouping manner, or the configured number of groups (maximum number of groups), corresponding to the LP-WUS, that is determined according to the first grouping manner is 0, the terminal device may determine that groups corresponding to the LP-WUS include groups according to the second grouping manner (that is, CN groups).

As another implementation, in a case that the second indication information does not include the third number of groups or that the third number of groups is 0, the target grouping manner includes the first grouping manner.

That is, if the access network device has not configured the number of groups (a maximum number of groups), corresponding to the LP-WUS, that is determined according to the second grouping manner, or the configured number of groups (maximum number of groups), corresponding to the LP-WUS, that is determined according to the second grouping manner is 0, the terminal device may determine that groups corresponding to the LP-WUS include groups according to the first grouping manner (that is, groups based on a terminal device identifier).

As another implementation, in a case that the fourth number of groups in the second indication information is the same as the first number of groups, the target grouping manner includes the first grouping manner.

That is, if the number of groups (a maximum number of groups), corresponding to the LP-WUS, configured by the access network device is the same as the number of groups (a maximum number of groups), corresponding to the LP-WUS, that is determined according to the first grouping manner, the third number of groups is 0, and in this case, the terminal device determines that grouping corresponding to the LP-WUS includes grouping according to the first grouping manner (that is, grouping based on a terminal device identifier).

As another implementation, in a case that the fourth number of groups in the second indication information is the same as the third number of groups, the target grouping manner includes the second grouping manner.

That is, if the number of groups (a maximum number of groups), corresponding to the LP-WUS, configured by the access network device is the same as the number of groups (a maximum number of groups), corresponding to the LP-WUS, that is determined according to the second grouping manner, the first number of groups is 0, and in this case, the terminal device determines that groups corresponding to the LP-WUS include groups according to the second grouping manner (that is, CN groups).

As another implementation, in a case that the fourth number of groups in the second indication information is greater than the third number of groups, the target grouping manner includes the first grouping manner and the second grouping manner.

That is, if the number of groups (a maximum number of groups), corresponding to the LP-WUS, configured by the access network device is greater than the number of groups (a maximum number of groups), corresponding to the LP-WUS, that is determined according to the second grouping manner, the first number of groups is not 0, and in this case, the terminal device determines that groups corresponding to the LP-WUS include groups according to the first grouping manner (that is, grouping based on a terminal device identifier) and groups according to the second grouping manner (that is, CN groups).

As another implementation, in a case that the fourth number of groups in the second indication information is greater than the first number of groups, the target grouping manner includes the first grouping manner and the second grouping manner.

That is, if the number of groups (a maximum number of groups), corresponding to the LP-WUS, configured by the access network device is greater than the number of groups (a maximum number of groups), corresponding to the LP-WUS, that is determined according to the first grouping manner, the third number of groups is not 0, and in this case, the terminal device determines that grouping corresponding to the LP-WUS includes grouping according to the first grouping manner (that is, grouping based on a terminal device identifier) and grouping according to the second grouping manner (that is, a CN group).

In some other embodiments, the terminal device may further determine, based on the second indication information, whether a grouping manner for the LP-WUS is used to indicate wake-up of the terminal device (that is, whether a grouping manner for the LP-WUS is supported).

The terminal device performs the foregoing step S210 only when determining that a grouping manner for the LP-WUS is used to indicate wake-up of the terminal device. When the grouping manner for the LP-WUS is not used to indicate wake-up of the terminal device, the terminal device may not perform the foregoing step S210.

As an implementation, in a case that the second indication information does not include the fourth number of groups or that the fourth number of groups is 0, the grouping manner for the LP-WUS is not used to indicate wake-up of the terminal device.

That is, if the access network device has not configured the number of groups (a maximum number of groups) corresponding to the LP-WUS, or the number of groups (maximum number of groups) corresponding to the LP-WUS is 0, both the first number of groups and the third number of groups are 0, and in this case, a plurality of terminal devices are not grouped, and therefore the terminal device determines that a grouping manner for the LP-WUS is not used to indicate wake-up of the terminal device.

As an implementation, in a case that the second indication information does not include the first number of groups and the third number of groups, or that the first number of groups is 0 and the third number of groups is 0, a grouping manner for the LP-WUS is not used to indicate wake-up of the terminal device.

That is, if both the first number of groups and the third number of groups configured by the access network device are 0, a plurality of terminal devices are not grouped in this case, and therefore the terminal device determines that a grouping manner for the LP-WUS is not used to indicate wake-up of the terminal device.

In some embodiments, referring to FIG. 7, the method 200 may further include step S270.

S270. A target grouping manner is determined according to a grouping manner corresponding to a PEI.

By way of example, the target grouping manner may be the same as or partially the same as the grouping manner corresponding to the PEI, or the target grouping manner may be different from the grouping manner corresponding to the PEI, which is not limited in this application.

As an implementation, in a case that the grouping manner corresponding to the PEI includes the first grouping manner, the target grouping manner is the first grouping manner.

Specifically, that the grouping manner corresponding to the PEI includes the first grouping manner may mean that the grouping manner corresponding to the PEI may be the first grouping manner, or mean that the grouping manner corresponding to the PEI is the first grouping manner and the second grouping manner. By way of example, when the grouping manner corresponding to the PEI is the first grouping manner, a network side may provide configuration information according to the first grouping manner for the PEI; and when the grouping manner corresponding to the PEI is the first grouping manner and the second grouping manner, the network side may provide configuration information according to the first grouping manner for the PEI and configuration information corresponding to the second grouping manner for the PEI. In this case, it indicates that a network-side device supports the first grouping manner, and therefore a target grouping manner corresponding to the LP-WUS may be (that is, use) the first grouping manner.

As another implementation, in a case that the grouping manner corresponding to the PEI includes the second grouping manner, the target grouping manner is the second grouping manner.

Specifically, that the grouping manner corresponding to the PEI includes the second grouping manner may mean that the grouping manner corresponding to the PEI may be the second grouping manner, or mean that the grouping manner corresponding to the PEI is the first grouping manner and the second grouping manner. By way of example, when the grouping manner corresponding to the PEI is the second grouping manner, a network side may provide configuration information corresponding to the second grouping manner for the PEI; when the grouping manner corresponding to the PEI is the first grouping manner and the second grouping manner, the network side may provide configuration information corresponding to the first grouping manner for the PEI and configuration information corresponding to the second grouping manner for the PEI. In this case, it indicates that a network-side device supports the second grouping manner, and therefore a target grouping manner corresponding to the LP-WUS may be (that is, use) the second grouping manner.

As another implementation, in a case that the grouping manner corresponding to the PEI is the first grouping manner, the target grouping manner is the first grouping manner.

Specifically, when the grouping manner corresponding to the PEI is the first grouping manner (that is, the grouping manner corresponding to the PEI includes only the first grouping manner), a network side may provide configuration information corresponding to the first grouping manner for the PEI. In this case, it indicates that a network-side device supports the first grouping manner, and therefore a target grouping manner corresponding to the LP-WUS may be (that is, use) the first grouping manner.

As another implementation, in a case that the grouping manner corresponding to the PEI is the second grouping manner, the target grouping manner is the second grouping manner.

Specifically, when the grouping manner corresponding to the PEI is the second grouping manner (that is, the grouping manner corresponding to the PEI includes only the second grouping manner), a network side may provide configuration information corresponding to the second grouping manner for the PEI. In this case, it indicates that a network-side device supports the second grouping manner, and therefore a target grouping manner corresponding to the LP-WUS may be (that is, use) the second grouping manner.

As another implementation, in a case that the grouping manner corresponding to the PEI includes the first grouping manner and the second grouping manner, the target grouping manner is the first grouping manner and the second grouping manner.

Specifically, when the grouping manner corresponding to the PEI includes the first grouping manner and the second grouping manner, a network side may provide configuration information corresponding to the first grouping manner for the PEI and configuration information corresponding to the second grouping manner for the PEI. In this case, it indicates that a network-side device supports the first grouping manner and the second grouping manner, and therefore a target grouping manner corresponding to the LP-WUS may be (that is, use) the first grouping manner and the second grouping manner.

As another implementation, in a case that the grouping manner corresponding to the PEI is the first grouping manner, the target grouping manner is the second grouping manner.

As another implementation, in a case that the grouping manner corresponding to the PEI is the second grouping manner, the target grouping manner is the first grouping manner.

Specifically, the target grouping manner is configured to be different from the grouping manner corresponding to the PEI, which helps make a terminal group corresponding to the LP-WUS different from a terminal group corresponding to the PEI, so that the dependency relationship between the terminal group corresponding to the LP-WUS and the terminal group corresponding to the PEI is dispersed as much as possible, and the two groupings are independent of each other, thereby allowing diversity gain for false wake-up reduction performance through different terminal groups.

It should be noted that in the method 200, one of step S260 and step S270 may be performed to determine the target grouping manner. Which step is specifically used to determine the target grouping manner may be configured by a network side, or defined (or agreed on) by a protocol, which is not limited in this application.

In some embodiments, a target grouping manner used by the LP-WUS may be defined (or agreed on) by a protocol, which is not limited in the embodiments of this application. For example, the protocol may agree to determine a group ID of a terminal device by using the first grouping manner, or agree to determine a group ID of a terminal device by using the second grouping manner, or agree to determine a group ID of a terminal device by using the first grouping manner and the second grouping manner, which is not limited in the embodiments of this application.

In some embodiments, signaling interaction may be performed between nodes (for example, an access network device and a core network device) to notify a grouping configuration corresponding to the LP-WUS. Through signaling interaction between nodes, the limited payload in the LP-WUS can be utilized more efficiently and more accurately to satisfy respective grouping requirements of the nodes, thereby avoiding insufficient grouping due to group wastage or an excessively high false wake-up probability due to insufficient grouping, which would otherwise lead to increased power consumption.

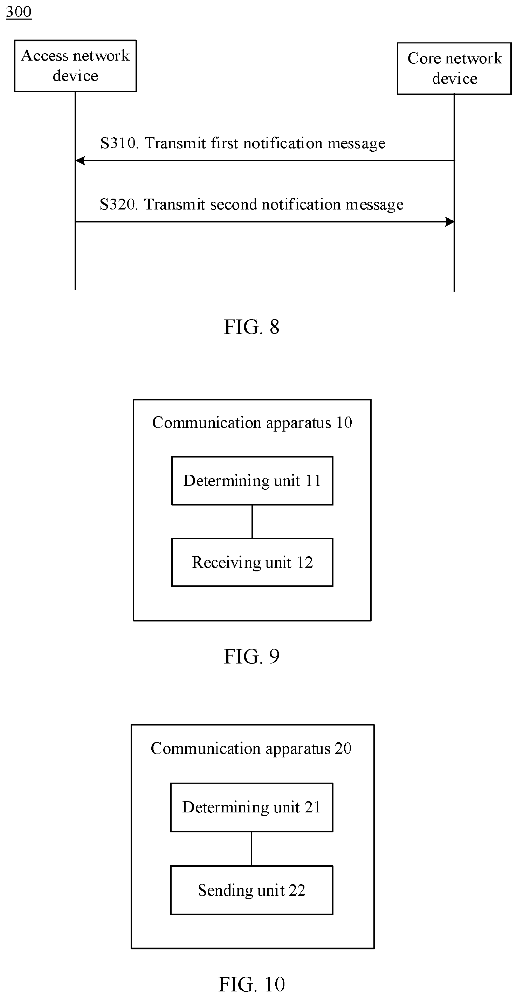

FIG. 8 shows a schematic diagram of a signaling interaction process 300 between an access network device and a core network device. As shown in FIG. 8, the signaling interaction process 300 may include at least one of step S310 and step S320.

S310. An access network device transmits a first notification message to a core network device.

Specifically, in step 310, the access network device may determine the fourth number of groups, that is, the number of groups corresponding to the LP-WUS, the number of bits corresponding to first indication information in an LP-WUS message, the number of bits used to indicate a first target terminal group in the LP-WUS, or the like.

As an implementation, the first notification message may include the fourth number of groups. This implementation is applicable to a case in which the target grouping manner includes only the second grouping manner. When the target grouping manner includes only the second grouping manner, terminal groups include only CN groups.

As another implementation, the first notification message may include a third number of groups. This implementation is applicable to a case in which the target grouping manner includes only the second grouping manner, or the target grouping manner includes the first grouping manner and the second grouping manner. When the target grouping manner includes the first grouping manner and the second grouping manner, terminal groups include terminal device identifier groups (or UE_ID groups) and CN groups. Optionally, in this manner, the core network device does not need to learn of a first number of groups.

As another implementation, the first notification message may include a first number of groups. This implementation is applicable to a case in which the target grouping manner includes the first grouping manner and the second grouping manner.

Optionally, the core network device may learn of the fourth number of groups in advance, for example, the core network device learns of the fourth number of groups from the access network device, which is not limited. When the core network device obtains the fourth number of groups and the first number of groups, the core network device may calculate, based on the fourth number of groups and the first number of groups, a third number of groups, that is, the number of groups (a maximum number of groups), corresponding to the LP-WUS, that is determined according to the second grouping manner.

S320. The core network device transmits a second notification message to the access network device.

Specifically, in step 320, the core network device may determine the fourth number of groups, that is, the number of groups corresponding to the LP-WUS, the number of bits corresponding to first indication information in an LP-WUS message, the number of bits used to indicate a first target terminal group in the LP-WUS, or the like.

As an implementation, the second notification message may include the fourth number of groups. This implementation is applicable to a case in which the target grouping manner includes only the first grouping manner, or the target grouping manner includes the first grouping manner and the second grouping manner. When the target grouping manner includes only the first grouping manner, terminal groups include only terminal device identifier groups (UE_ID groups).

Optionally, the access network device may learn of the first number of groups in advance, for example, through a decision made by the access network device itself, which is not limited.

As another implementation, the second notification message may include a third number of groups. This implementation is applicable to a case in which the target grouping manner includes only the second grouping manner, or the target grouping manner includes the first grouping manner and the second grouping manner.

Optionally, in a case in which the target grouping includes the first grouping manner and the second grouping manner, the access network device may learn of the fourth number of groups in advance, for example, the access network device obtains the fourth number of groups from the core network device, which is not limited. When the access network device obtains the fourth number of groups and the third number of groups, the access network device may calculate, based on the fourth number of groups and the third number of groups, a first number of groups, that is, the number of groups (a maximum number of groups), corresponding to the LP-WUS, that is determined according to the first grouping manner.

As another implementation, the first notification message may include the first number of groups. This implementation is applicable to a case in which the target grouping manner includes only the first grouping manner, or the target grouping manner includes the first grouping manner and the second grouping manner.

Optionally, the access network device may learn of the fourth number of groups in advance, for example, through a decision made by the access network device itself or learned of from the core network device, which is not limited. When the core network device obtains the fourth number of groups and the first number of groups, the core network device may calculate, based on the fourth number of groups and the first number of groups, a third number of groups, that is, the number of groups (a maximum number of groups), corresponding to the LP-WUS, that is determined according to the second grouping manner.

The foregoing describes in detail specific implementations of this application with reference to the accompanying drawings. However, this application is not limited to specific details in the foregoing implementations. Within the scope of the technical concept of this application, various simple modifications may be made to the technical solutions of this application, and these simple modifications all fall within the protection scope of this application. For example, various specific technical features described in the foregoing specific implementations may be combined in any suitable manner without contradiction. To avoid unnecessary repetition, various possible combination manners are not described in this application again. For another example, different implementations of this application may be combined in any manner, provided that such combinations do not depart from the concept of this application, and such combinations should also be considered as content disclosed in this application.

It should be further understood that in various method embodiments of this application, the sequence numbers of the foregoing processes do not imply the sequence of execution, and the sequence of execution of each process should be determined according to functions and internal logic thereof, but should not constitute any limitation on the implementation process of the embodiments of this application. It should be understood that these sequence numbers may be interchanged in an appropriate case, so that the embodiments of this application described can be implemented in a sequence other than those illustrated or described herein.

The foregoing describes in detail method embodiments of this application, and the following describes in detail apparatus embodiments of this application with reference to FIG. 9 to FIG. 13.

FIG. 9 is a schematic structural diagram of a communication apparatus 10 according to an embodiment of this application. As shown in FIG. 9, the communication apparatus 10 may include: a determining unit 11 and a receiving unit 12, where

the determining unit 11 is configured to determine a first group identifier ID of a first terminal group to which a terminal device belongs;
the receiving unit 12 is configured to receive a low power wake-up signal LP-WUS from an access network device, where the LP-WUS includes first indication information, the first indication information being used to indicate a first target group ID of a first target terminal group to be woken up, or the LP-WUS corresponds to the first target group ID of the first target terminal group to be woken up; and
the determining unit 11 is further configured to determine, based on the first group ID and the first indication information, whether the terminal device is to be woken up.

In some embodiments, the determining unit 11 is specifically configured to:
determine the first group ID according to a target grouping manner; where the target grouping manner includes at least one of a first grouping manner based on a terminal device identifier and a second grouping manner controlled by a core network.

In some embodiments, when the target grouping manner includes the first grouping manner, the determining unit 11 is specifically configured to:
determine the first group ID based on a first terminal device identifier of the terminal device and a first number of groups; where the first number of groups is a maximum number of groups, corresponding to the LP-WUS, that is determined according to the first grouping manner, or the number of groups, corresponding to the LP-WUS, that is determined according to the first grouping manner, or the number of groups corresponding to the LP-WUS, or the number of bits corresponding to first indication information in the LP-WUS.

In some embodiments, the determining unit 11 is further configured to:

determine a second terminal device identifier of the terminal device based on a mobile subscriber identifier of the terminal device and a first parameter X; and
determine the first terminal device identifier based on the second terminal device identifier and a second parameter.

In some embodiments, in a non-eDRX scenario, the first parameter X is a product of 8192 and the first number of groups; or,

in an eDRX scenario, the first parameter X is a product of 32798 and the first number of groups.

In some embodiments, in a non-eDRX scenario, the first parameter X is a product of 1024 and the first number of groups; or,

in an eDRX scenario, the first parameter X is a product of 4096 and the first number of groups.

In some embodiments, the first parameter X is predefined by a protocol.

In some embodiments, the second parameter includes a second number of groups; where the second number of groups is a maximum number of groups, corresponding to a paging early indication PEI, that is determined according to the first grouping manner, or the number of groups, corresponding to the PEI, that is determined according to the first grouping manner, or the number of groups corresponding to the PEI.

In some embodiments, the second parameter includes a second number of groups; where the second number of groups satisfies at least one of the following:

when a network has configured PEI or PEI grouping, or the terminal device is operating under PEI, the second number of groups is a maximum number of groups, corresponding to the PEI, that is determined according to the first grouping manner, or the number of groups, corresponding to the PEI, that is determined according to the first grouping manner, or the number of groups corresponding to the PEI; and when a network has not configured PEI or PEI grouping, or the terminal device does not support PEI or is not operating under PEI, the second number of groups is 1.

In some embodiments, the determining unit 11 is further configured to:
determine the first group ID based on the first terminal device identifier, the first number of groups, and a group ID start value corresponding to the first grouping manner.

In some embodiments, the group ID start value is determined based on the number of groups, corresponding to the LP-WUS, that is determined according to the second grouping manner.

In some embodiments, when the target grouping manner includes the second grouping manner, the determining unit 11 is specifically configured to:
receive the first group ID from the core network device.

In some embodiments, the communication apparatus 10 further includes a transmitting unit configured to:
transmit grouping capability information, where the grouping capability information is used to indicate that the terminal device supports the second grouping manner, or indicate that the terminal device supports LP-WUS grouping, or indicate that the terminal device supports wake-up based on the LP-WUS.

In some embodiments, the receiving unit 12 is further configured to:

obtain second indication information from the access network device, where the second indication information is used to indicate at least one of a first number of groups, a third number of groups, and a fourth number of groups; where
the first number of groups includes a maximum number of groups, corresponding to the LP-WUS, that is determined according to the first grouping manner, or the number of groups, corresponding to the LP-WUS, that is determined according to the first grouping manner, or a base-2 logarithm of the maximum number of groups, corresponding to the LP-WUS, that is determined according to the first grouping manner, or a base-2 logarithm of the number of groups, corresponding to the LP-WUS, that is determined according to the first grouping manner;
the third number of groups includes a maximum number of groups, corresponding to the LP-WUS, that is determined according to the second grouping manner, or the number of groups, corresponding to the LP-WUS, that is determined according to the second grouping manner, or a base-2 logarithm of the maximum number of groups, corresponding to the LP-WUS, that is determined according to the second grouping manner, or a base-2 logarithm of the number of groups, corresponding to the LP-WUS, that is determined according to the second grouping manner; and
the fourth number of groups includes the number of groups corresponding to the LP-WUS, or the number of bits corresponding to first indication information in the LP-WUS, or the number of bits used to indicate a first target terminal group in the LP-WUS, or a base-2 logarithm of the number of groups corresponding to the LP-WUS, or a value obtained by taking 2 as the base and the number of bits of the first indication information in the LP-WUS as an exponent, or a value obtained by taking 2 as the base and the number of bits used to indicate the first target terminal group in the LP-WUS as an exponent.

In some embodiments, the determining unit 11 is further configured to:
determine the target grouping manner based on the second indication information.

In some embodiments, the determining unit 11 is specifically configured to determine the target grouping manner according to at least one of the following:

in a case that the second indication information includes the third number of groups, the target grouping manner includes the second grouping manner;
in a case that the second indication information includes the first number of groups, the target grouping manner includes the first grouping manner;

in a case that the second indication information does not include the first number of groups or that the first number of groups is 0, the target grouping manner includes the second grouping manner;

in a case that the second indication information does not include the third number of groups or that the third number of groups is 0, the target grouping manner includes the first grouping manner;

in a case that the fourth number of groups in the second indication information is the same as the first number of groups, the target grouping manner includes the first grouping manner;

in a case that the fourth number of groups in the second indication information is the same as the third number of groups, the target grouping manner includes the second grouping manner;

in a case that the fourth number of groups in the second indication information is greater than the third number of groups, the target grouping manner includes the first grouping manner and the second grouping manner; and

in a case that the fourth number of groups in the second indication information is greater than the first number of groups, the target grouping manner includes the first grouping manner and the second grouping manner.

In some embodiments, the determining unit 11 is further configured to:

determine, based on the second indication information, whether the grouping manner for the LP-WUS is used to indicate wake-up of the terminal device; where

in a case that the second indication information does not include the fourth number of groups or that the fourth number of groups is 0, the grouping manner for the LP-WUS is not used to indicate wake-up of the terminal device; and

in a case that the second indication information does not include the first number of groups and does not include the third number of groups, a grouping manner for the LP-WUS is not used to indicate wake-up of the terminal device.

In some embodiments, the second indication information is carried in at least one of the following messages:

system information SI, an LP-SS, a preamble part of the LP-WUS, or an RRC release message.

In some embodiments, the determining unit 11 is further configured to:

determine the target grouping manner according to a grouping manner corresponding to a PEI.

In some embodiments, the determining unit 11 is specifically configured to determine the target grouping manner according to at least one of the following:

in a case that the grouping manner corresponding to the PEI includes the first grouping manner, the target grouping manner is the first grouping manner;

in a case that the grouping manner corresponding to the PEI includes the second grouping manner, the target grouping manner is the second grouping manner;

in a case that the grouping manner corresponding to the PEI is the first grouping manner, the target grouping manner is the first grouping manner;

in a case that the grouping manner corresponding to the PEI is the second grouping manner, the target grouping manner is the second grouping manner;

in a case that the grouping manner corresponding to the PEI includes the first grouping manner and the second grouping manner, the target grouping manner is the first grouping manner and the second grouping manner;

in a case that the grouping manner corresponding to the PEI is the first grouping manner, the target grouping manner is the second grouping manner; and

in a case that the grouping manner corresponding to the PEI is the second grouping manner, the target grouping manner is the first grouping manner.

In some embodiments, the determining unit 11 is specifically configured to:

determine the first group ID based on a group ID corresponding to a PEI, of a terminal group to which the terminal device belongs.

In some embodiments, the number of bits of the first indication information is determined according to the number of groups corresponding to the LP-WUS.

In some embodiments, the receiving unit 12 is further configured to:

receive a PEI from a network-side device, where the PEI includes indication information used to indicate a second target group ID of a second target terminal group that needs to receive a paging message.

In some embodiments, the determining unit 11 is further configured to:

determine not to receive a PEI, where the PEI includes indication information used to indicate a second target group ID of a second target terminal group that needs to receive a paging message.

In some embodiments, the determining unit 11 is specifically configured to determine whether the terminal device is to be woken up according to at least one of the following:

in a case that the first target group ID includes the first group ID, determine that the terminal device is to be woken up;

in a case that the first target terminal group includes the terminal device, determine that the terminal device is to be woken up;

in a case that the first target group ID does not include the first group ID, determine that the terminal device is not to be woken up; and

in a case that the first target terminal group does not include the terminal device, determine that the terminal device is not to be woken up.

In some embodiments, the determining unit 11 is specifically configured to determine whether the terminal device is to be woken up according to at least one of the following:

determining whether the terminal device is to receive a paging message;

determining whether the terminal device is to receive a PEI;

determining whether the terminal device is to exit a low power sleep mode;

determining whether the terminal device is to monitor a PDCCH;

determining whether the terminal device is to transmit/receive a signal through a main receiver;

determining whether the terminal device is to receive system information; and

determining whether the terminal device is to perform random access.

It should be understood that apparatus embodiments may correspond to method embodiments, and similar descriptions may refer to the method embodiments. To avoid repetition, details are not described herein again. Specifically, the communication apparatus 10 shown in FIG. 9 may perform the method embodiment corresponding to FIG. 6 or FIG. 7, and the foregoing and other operations and/or functions of the modules in the communication apparatus 10 are respectively for implementing corresponding procedures of the terminal device in the method embodiment corresponding to FIG. 6 or FIG. 7. For brevity, details are not described herein again.

FIG. 10 is a schematic structural diagram of a communication apparatus 20 according to an embodiment of this application. As shown in FIG. 10, the communication apparatus 20 may include: a determining unit 21 and a transmitting unit 22.

The determining unit 21 is configured to determine a first group identifier ID of a first terminal group to which a terminal device belongs.

The transmitting unit 22 is configured to transmit a low power wake-up signal LP-WUS, where the LP-WUS includes first indication information, the first indication information being used to indicate waking up terminal devices in the first terminal group corresponding to the first group ID, or the LP-WUS corresponds to a first target group ID of a first target terminal group to be woken up.

In some embodiments, the determining unit 21 is specifically configured to:

determine the first group ID according to a target grouping manner; where the target grouping manner includes at least one of a first grouping manner based on a terminal device identifier and a second grouping manner controlled by a core network.

In some embodiments, when the target grouping manner includes the first grouping manner, the determining unit 21 is specifically configured to:

determine the first group ID based on a first terminal device identifier of the terminal device and a first number of groups; where the first number of groups is a maximum number of groups, corresponding to the LP-WUS, that is determined according to the first grouping manner, or the number of groups, corresponding to the LP-WUS, that is determined according to the first grouping manner, or the number of groups corresponding to the LP-WUS, or the number of bits corresponding to first indication information in the LP-WUS.

In some embodiments, the determining unit 21 is further configured to:

determine a second terminal device identifier of the terminal device based on a mobile subscriber identifier of the terminal device and a first parameter X; and

determine the first terminal device identifier based on the second terminal device identifier and a second parameter.

In some embodiments, in a non-eDRX scenario, the first parameter X is a product of 8192 and the first number of groups; or,

in an eDRX scenario, the first parameter X is a product of 32798 and the first number of groups.

In some embodiments, in a non-eDRX scenario, the first parameter X is a product of 1024 and the first number of groups; or,

in an eDRX scenario, the first parameter X is a product of 4096 and the first number of groups.

In some embodiments, the first parameter X is predefined by a protocol.

In some embodiments, the second parameter includes a second number of groups; where the second number of groups is a maximum number of groups, corresponding to a paging early indication PEI, that is determined according to the first grouping manner, or the number of groups, corresponding to the PEI, that is determined according to the first grouping manner, or the number of groups corresponding to the PEI.

In some embodiments, the second parameter includes a second number of groups; where the second number of groups satisfies at least one of the following:

when a network has configured PEI or PEI grouping, or the terminal device is operating under PEI, the second number of groups is a maximum number of groups, corresponding to the PEI, that is determined according to the first grouping manner, or the number of groups, corresponding to the PEI, that is determined according to the first grouping manner, or the number of groups corresponding to the PEI; and

when a network has not configured PEI or PEI grouping, or the terminal device does not support PEI or is not operating under PEI, the second number of groups is 1.

In some embodiments, the determining unit 21 is specifically configured to:
determine the first group ID based on the first terminal device identifier, the first number of groups, and a group ID start value corresponding to the first grouping manner.

In some embodiments, the group ID start value is determined based on the number of groups, corresponding to the LP-WUS, that is determined according to the second grouping manner.

In some embodiments, when the target grouping manner includes the second grouping manner, the determining unit 21 is specifically configured to:
receive the first group ID from a core network device.

In some embodiments, the communication apparatus 20 further includes a receiving unit configured to:
receive grouping capability information, where the grouping capability information is used to indicate that the terminal device supports the second grouping manner, or indicate that the terminal device supports LP-WUS grouping, or indicate that the terminal device supports wake-up based on the LP-WUS.

In some embodiments, the transmitting unit 22 is further configured to:

transmit second indication information, where the second indication information is used to indicate at least one of a first number of groups, a third number of groups, and a fourth number of groups; where the first number of groups includes a maximum number of groups, corresponding to the LP-WUS, that is determined according to the first grouping manner, or the number of groups, corresponding to the LP-WUS, that is determined according to the first grouping manner, or a base-2 logarithm of the maximum number of groups, corresponding to the LP-WUS, that is determined according to the first grouping manner, or a base-2 logarithm of the number of groups, corresponding to the LP-WUS, that is determined according to the first grouping manner; the third number of groups includes a maximum number of groups, corresponding to the LP-WUS, that is determined according to the second grouping manner, or the number of groups, corresponding to the LP-WUS, that is determined according to the second grouping manner, or a base-2 logarithm of the maximum number of groups, corresponding to the LP-WUS, that is determined according to the second grouping manner, or a base-2 logarithm of the number of groups, corresponding to the LP-WUS, that is determined according to the second grouping manner; and the fourth number of groups includes the number of groups corresponding to the LP-WUS, or the number of bits corresponding to first indication information in the LP-WUS, or the number of bits used to indicate a first target terminal group in the LP-WUS, or a base-2 logarithm of the number of groups corresponding to the LP-WUS, or a value obtained by taking 2 as the base and the number of bits of the first indication information in the LP-WUS as an exponent, or a value obtained by taking 2 as the base and the number of bits used to indicate the first target terminal group in the LP-WUS as an exponent.

In some embodiments, the second indication information is carried in at least one of the following messages:
system information SI, an LP-SS, a preamble part of the LP-WUS, or an RRC release message.

In some embodiments, the determining unit 21 is specifically configured to:
determine the target grouping manner according to a grouping manner corresponding to a PEI.

In some embodiments, the determining unit 21 is specifically configured to determine the target grouping manner according to at least one of the following:

in a case that the grouping manner corresponding to the PEI includes the first grouping manner, the target grouping manner is the first grouping manner;
in a case that the grouping manner corresponding to the PEI includes the second grouping manner, the target grouping manner is the second grouping manner;
in a case that the grouping manner corresponding to the PEI is the first grouping manner, the target grouping manner is the first grouping manner;
in a case that the grouping manner corresponding to the PEI is the second grouping manner, the target grouping manner is the second grouping manner;
in a case that the grouping manner corresponding to the PEI includes the first grouping manner and the second grouping manner, the target grouping manner is the first grouping manner and the second grouping manner;
in a case that the grouping manner corresponding to the PEI is the first grouping manner, the target grouping manner is the second grouping manner; and
in a case that the grouping manner corresponding to the PEI is the second grouping manner, the target grouping manner is the first grouping manner.

In some embodiments, the determining unit 21 is specifically configured to:
determine the first group ID based on a group ID corresponding to a PEI, of a terminal group to which the terminal device belongs.

In some embodiments, the number of bits of the first indication information is determined according to the number of groups corresponding to the LP-WUS.

In some embodiments, the transmitting unit 22 is further configured to:

transmit a PEI, where the PEI includes indication information used to indicate a second target group ID of a second target terminal group that needs to receive a paging message.

It should be understood that apparatus embodiments may correspond to method embodiments, and similar descriptions may refer to the method embodiments. To avoid repetition, details are not described herein again. Specifically, the communication apparatus 20 shown in FIG. 10 may perform the method embodiment corresponding to FIG. 6 or FIG. 7 or FIG. 8, and the foregoing and other operations and/or functions of the modules in the communication apparatus 20 are respectively for implementing corresponding procedures of the network-side device in the method embodiment corresponding to FIG. 6 or FIG. 7 or FIG. 8. For brevity, details are not described herein again.

The foregoing describes the communication apparatus in the embodiments of this application from the perspective of functional modules with reference to the accompanying drawings. It should be understood that the functional modules may be implemented in hardware form, or may be implemented through instructions in the form of software, or may be implemented through a combination of hardware and software modules. Specifically, the steps of the method embodiments in the embodiments of this application may be completed by hardware integrated logic circuits and/or instructions in the form of software in a processor, and the steps of the methods disclosed with reference to the embodiments of this application may be directly performed by a hardware encoding processor, or may be performed by a combination of hardware and software modules in the encoding processor. Optionally, the software module may be located in a mature storage medium in the art, such as a random access memory, a flash memory, a read-only memory, a programmable read-only memory, an electrically erasable programmable memory, or a register. The storage medium is located in a memory, and a processor reads information in the memory and completes the steps in the foregoing method embodiments in combination with hardware thereof.

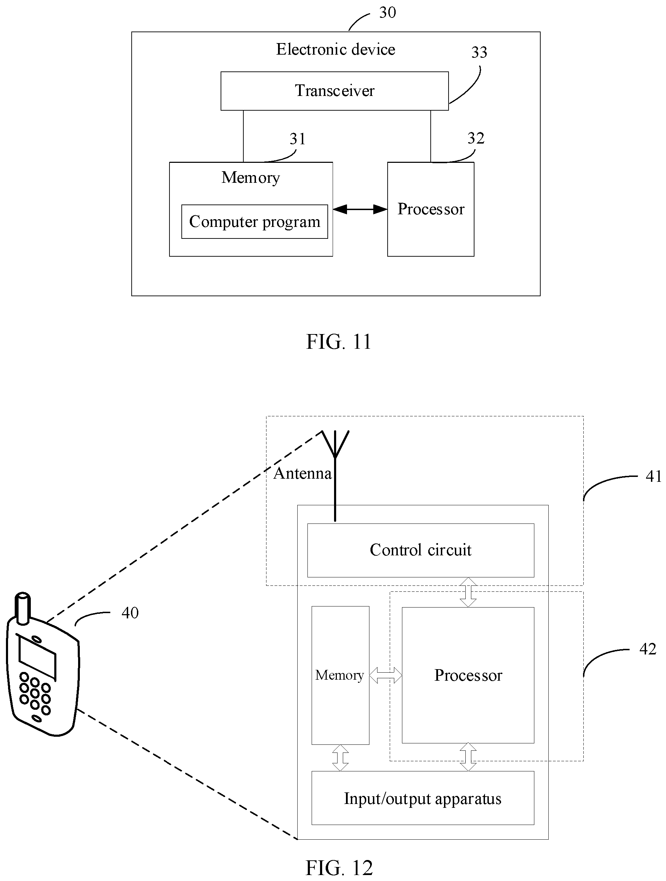

FIG. 11 is a schematic block diagram of an electronic device 30 according to an embodiment of this application. The electronic device may be the foregoing communication apparatus, such as a terminal device or a network-side device.

As shown in FIG. 11, the electronic device 30 may include:

a memory 31 and a processor 32, where the memory 31 is configured to store a computer program and transmit codes of the program to the processor 32. In other words, the processor 32 may invoke and run the computer program from the memory 31 to implement the communication method in the embodiments of this application.

For example, the processor 32 may be configured to perform the foregoing method embodiments according to instructions in the computer program.

In some embodiments of this application, the processor 32 may include, but is not limited to:

a general-purpose processor, a digital signal processor (Digital Signal Processor, DSP), an application specific integrated circuit (Application Specific Integrated Circuit, ASIC), a field programmable gate array (Field Programmable Gate Array, FPGA), or other programmable logic devices, discrete gate or transistor logic devices, discrete hardware components, and the like.

In some embodiments of this application, the memory 31 includes but is not limited to:

a volatile memory and/or a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory; and the volatile memory may be a random access memory (Random Access Memory, RAM), which is used as an external cache. By way of example and not limitation, many forms of RAM are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (sync link DRAM, SLDRAM), and a direct Rambus random access memory (Direct Rambus RAM, DR RAM).

In some embodiments of this application, the computer program may be divided into one or more modules, and the one or more modules are stored in the memory 31 and executed by the processor 32 to complete the methods provided in this application. The one or more modules may be a series of computer program instruction segments capable of completing specific functions, and the instruction segments are used to describe an execution process of the computer program in the electronic device.

As shown in FIG. 11, the electronic device 30 may further include:

a transceiver 33, where the transceiver 33 may be connected to the processor 32 or the memory 31.

The processor 32 may control the transceiver 33 to communicate with another device. Specifically, the transceiver 33 may transmit information or data to another device or receive information or data transmitted by another device. The transceiver 33 may include a transmitter and a receiver. The transceiver 33 may further include an antenna, and a quantity of antennas may be one or more.

It should be understood that components in the electronic device are connected through a bus system, and in addition to a data bus, the bus system further includes a power bus, a control bus, and a status signal bus.

FIG. 12 is a schematic structural diagram of a terminal device 40 provided in this application. The terminal device 40 may perform actions performed by the terminal device in the foregoing method embodiments. For ease of description, FIG. 12 shows only main components of the terminal device. As shown in FIG. 12, the terminal device 40 includes a processor, a memory, a control circuit, an antenna, and an input/output apparatus.

The processor is mainly configured to process a communication protocol and communication data, control the entire terminal device, execute a software program, and process data of the software program. The memory is mainly configured to store the software program and data. The control circuit is mainly configured to perform conversion between a baseband signal and a radio frequency signal and process the radio frequency signal. The control circuit together with the antenna may also be referred to as a transceiver, and is mainly configured to transmit/receive a radio frequency signal in the form of an electromagnetic wave. The input/output apparatus, such as a touchscreen, a display screen, or a keyboard, is mainly configured to receive data input by a user and output data to the user.

When the terminal device is powered on, the processor may read a software program in a storage unit, interpret and execute an instruction of the software program, and process data of the software program. When data needs to be transmitted wirelessly, the processor performs baseband processing on to-be-transmitted data, and then outputs a baseband signal to a radio frequency circuit. The radio frequency circuit performs radio frequency processing on the baseband signal, and then transmits a radio frequency signal through the antenna in the form of an electromagnetic wave. When data is transmitted to the terminal device, the radio frequency circuit receives a radio frequency signal through the antenna, converts the radio frequency signal into a baseband signal, and outputs the baseband signal to the processor. The processor converts the baseband signal into data and processes the data.

Persons skilled in the art may understand that for ease of description, FIG. 12 shows only one memory and one processor. In an actual terminal device, there may be a plurality of processors and memories. The memory may also be referred to as a storage medium, a storage device, or the like. This is not limited in the embodiments of this application.

For example, the processor may include a baseband processor and a central processing unit. The baseband processor is mainly configured to process a communication protocol and communication data. The central processing unit is mainly configured to control the entire terminal device, execute a software program, and process data of the software program. Functions of the baseband processor and the central processing unit may be integrated into the processor in FIG. 12. Persons skilled in the art may understand that the baseband processor and the central processing unit may be independent processors, and are interconnected through a technology such as a bus. Persons skilled in the art may understand that the terminal device may include a plurality of baseband processors to adapt to different network standards, and the terminal device may include a plurality of central processing units to enhance processing capabilities thereof, and components of the terminal device may be connected through various buses. The baseband processor may also be expressed as a baseband processing circuit or a baseband processing chip. The central processing unit may also be expressed as a central processing circuit or a central processing chip. The function of processing the communication protocol and the communication data may be built in the processor, or may be stored in the storage unit in the form of a software program, and the processor executes the software program to implement a baseband processing function.

By way of example, in this embodiment of this application, an antenna having a transceiver function and a control circuit may be considered as a transceiver unit 41 of the terminal device 40, and a processor having a processing function may be considered as a processing unit 42 of the terminal device 40. As shown in FIG. 12, the terminal device 40 includes the transceiver unit 41 and the processing unit 42. The transceiver unit 41 may also be referred to as a transceiver, a transceiver machine, a transceiver apparatus, or the like. Optionally, a device configured to implement a receiving function in the transceiver unit 41 may be considered as a receiving unit, and a device configured to implement a transmitting function in the transceiver unit 41 may be considered as a transmitting unit. That is, the transceiver unit includes the receiving unit and the transmitting unit. By way of example, the receiving unit may also be referred to as a receiver, a receiving device, or a receiving circuit, and the transmitting unit may be referred to as a transmitter, a transmitting device, or a transmitting circuit.

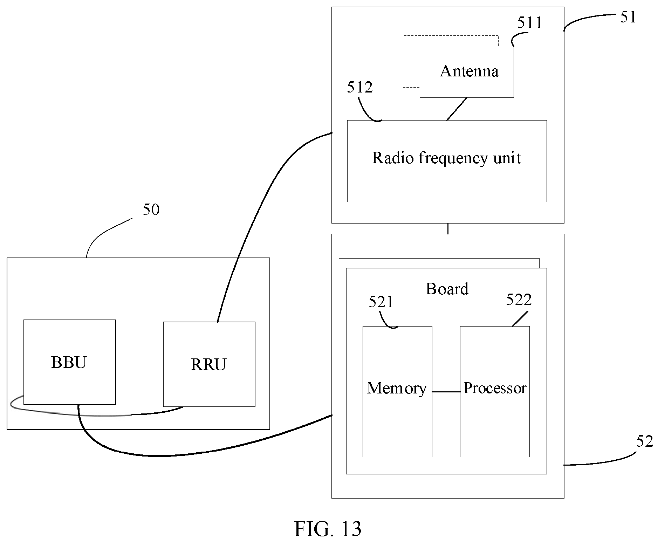

FIG. 13 is a schematic structural diagram of a network device 50 according to an embodiment of this application, and may be configured to implement functions of an access network device in the foregoing methods. The network device 50 includes one or more radio frequency units, such as remote radio units (remote radio unit, RRU) 51 and one or more baseband units (baseband unit, BBU) (which may also be referred to as digital unit, digital unit, DU) 52. The RRU 51 may be referred to as a transceiver unit, a transceiver machine, a transceiver circuit, a transceiver, or the like, and may include at least one antenna 511 and a radio frequency unit 512. The RRU 51 is mainly configured to transmit/receive a radio frequency signal and perform conversion between a radio frequency signal and a baseband signal, for example, configured to transmit a signaling message in the foregoing embodiments to a terminal device.

The BBU 52 is mainly configured to perform baseband processing, control the base station, and the like. The RRU 51 and the BBU 52 may be physically disposed together, or may be physically separated, that is, in a distributed base station.

The BBU 52 is a control center of the base station, may also be referred to as a processing unit, and is mainly configured to complete baseband processing functions such as channel coding, multiplexing, modulation, and spreading. For example, the BBU (processing unit) 52 may be configured to control the network device to perform an operation procedure related to the network device in the foregoing method embodiments.

In an example, the BBU 52 may include one or more boards, and a plurality of boards may jointly support a radio access network (for example, an LTE system or a 5G system) of a single access standard, or may separately support radio access networks of different access standards. The BBU 52 further includes a memory 521 and a processor 522. The memory 521 is configured to store necessary instructions and data. The processor 522 is configured to control the network device to perform necessary actions, for example, configured to control the network device to perform an operation procedure related to the network device in the foregoing method embodiments. The memory 521 and the processor 522 may serve one or more boards. That is, a memory and a processor may be separately disposed on each board. Alternatively, a plurality of boards may share the same memory and processor. In addition, a necessary circuit may be disposed on each board.

In a possible implementation, with development of a system-on-chip (system-on-chip, SoC) technology, all or some functions of the part 52 and the part 51 may be implemented by using the SoC technology, for example, implemented by using a base station function chip. The base station function chip integrates devices such as a processor, a memory, and an antenna interface. A program related to a base station function is stored in the memory, and the processor executes the program to implement the base station-related function. Optionally, the base station function chip may further read an external memory of the chip to implement the base station-related function.

It should be understood that the structure of the network device shown in FIG. 13 is merely a possible form, and should not constitute any limitation on the embodiments of this application. This application does not exclude a possibility that a base station structure in another form may appear in the future.

According to the methods provided in the embodiments of this application, this application further provides a communication system, including the foregoing network device and terminal device.

This application further provides a computer storage medium on which a computer program is stored. When the computer program is executed by a computer, the computer may perform the method in the foregoing method embodiments. Alternatively, this embodiment of this application further provides a computer program product including instructions. When the instructions are executed by a computer, the computer is enabled to perform the method in the foregoing method embodiments.

When software is used for implementation, all or some of the software may be implemented in the form of a computer program product. The computer program product includes one or more computer instructions. When the computer program instructions are loaded and executed on a computer, all or some of procedures or functions according to the embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid-state disk (solid state disk, SSD)).

Persons of ordinary skill in the art may be aware that, in combination with the examples described in the embodiments disclosed in this specification, modules and algorithm steps may be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments. For example, functional units in the embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by Persons skilled in the art within the technical scope disclosed in this application shall fall within the protection scope of this application. Therefore, the protection scope of this application shall be subject to the protection scope of the claims.

**Claims**

1. A communication method performed by a terminal device, comprising:

   determining a first group identifier ID of a first terminal group to which the terminal device belongs;
   receiving a low power wake-up signal LP-WUS from an access network device, wherein the LP-WUS comprises first indication information, the first indication information being used to indicate a first target group ID of a first target terminal group to be woken up, or the LP-WUS corresponds to a first target group ID of a first target terminal group to be woken up; and
   determining, based on the first group ID and/or the first indication information, whether the terminal device is to be woken up.

2. The method according to claim 1, wherein the determining a first group identifier ID of a first terminal group to which the terminal device belongs comprises:
   determining the first group ID according to a target grouping manner; wherein the target grouping manner comprises at least one of a first grouping manner based on a terminal device identifier and a second grouping manner controlled by a core network.

3. The method according to claim 2, wherein when the target grouping manner comprises the first grouping manner, the determining the first group ID according to a target grouping manner comprises:
determining the first group ID based on a first terminal device identifier of the terminal device and a first number of groups; wherein the first number of groups is a maximum number of groups, corresponding to the LP-WUS, that is determined according to the first grouping manner, or the number of groups, corresponding to the LP-WUS, that is determined according to the first grouping manner, or the number of groups corresponding to the LP-WUS, or the number of bits corresponding to first indication information in the LP-WUS.

4. The method according to claim 3, further comprising:

   determining a second terminal device identifier of the terminal device based on a mobile subscriber identifier of the terminal device and a first parameter X; and
   determining the first terminal device identifier based on the second terminal device identifier and a second parameter.

5. The method according to claim 4, wherein in a non-eDRX scenario, the first parameter X is a product of 8192 and the first number of groups; or,
   in an eDRX scenario, the first parameter X is a product of 32798 and the first number of groups.

6. The method according to claim 4, wherein in a non-eDRX scenario, the first parameter X is a product of 1024 and the first number of groups; or,
   in an eDRX scenario, the first parameter X is a product of 4096 and the first number of groups.

7. The method according to any one of claims 4 to 6, wherein the second parameter comprises a second number of groups; wherein the second number of groups is a maximum number of groups, corresponding to a paging early indication PEI, that is determined according to the first grouping manner, or the number of groups, corresponding to the PEI, that is determined according to the first grouping manner, or the number of groups corresponding to the PEI.

8. The method according to any one of claims 4 to 6, wherein the second parameter comprises a second number of groups; wherein the second number of groups satisfies at least one of the following:

   when a network has configured PEI or PEI grouping, or the terminal device is operating under PEI, the second number of groups is a maximum number of groups, corresponding to the PEI, that is determined according to the first grouping manner, or the number of groups, corresponding to the PEI, that is determined according to the first grouping manner, or the number of groups corresponding to the PEI; and when a network has not configured PEI or PEI grouping, or the terminal device does not support PEI or is not operating under PEI, the second number of groups is 1.

9. The method according to claim 3, wherein the determining the first group ID based on a first terminal device identifier of the terminal device and a first number of groups comprises:
determining the first group ID based on the first terminal device identifier, the first number of groups, and a group ID start value corresponding to the first grouping manner.

10. The method according to claim 9, wherein the group ID start value is determined based on the number of groups, corresponding to the LP-WUS, that is determined according to the second grouping manner.

11. The method according to claim 2, wherein when the target grouping manner comprises the second grouping manner, the determining the first group ID according to a target grouping manner comprises:
receiving the first group ID from the core network device.

12. The method according to claim 11, further comprising:
transmitting grouping capability information, wherein the grouping capability information is used to indicate that the terminal device supports the second grouping manner, or indicate that the terminal device supports LP-WUS grouping, or indicate that the terminal device supports wake-up based on the LP-WUS.

13. The method according to any one of claims 2 to 12, further comprising:

obtaining second indication information from the access network device, wherein the second indication information is used to indicate at least one of a first number of groups, a third number of groups, and a fourth number of groups; wherein the first number of groups comprises a maximum number of groups, corresponding to the LP-WUS, that is determined according to the first grouping manner, or the number of groups, corresponding to the LP-WUS, that is determined according to the first grouping manner, or a base-2 logarithm of a maximum number of groups, corresponding to the LP-WUS, that is determined according to the first grouping manner, or a base-2 logarithm of the number of groups, corresponding to the LP-WUS, that is determined according to the first grouping manner;
the third number of groups comprises a maximum number of groups, corresponding to the LP-WUS, that is determined according to the second grouping manner, or the number of groups, corresponding to the LP-WUS, that is determined according to the second grouping manner, or a base-2 logarithm of a maximum number of groups, corresponding to the LP-WUS, that is determined according to the second grouping manner, or a base-2 logarithm of the number of groups, corresponding to the LP-WUS, that is determined according to the second grouping manner; and
the fourth number of groups comprises the number of groups corresponding to the LP-WUS, or the number of bits corresponding to first indication information in the LP-WUS, or the number of bits used to indicate a first target terminal group in the LP-WUS, or a base-2 logarithm of the number of groups corresponding to the LP-WUS, or a value obtained by taking 2 as the base and the number of bits of the first indication information in the LP-WUS as an exponent, or a value obtained by taking 2 as the base and the number of bits used to indicate the first target terminal group in the LP-WUS as an exponent.

14. The method according to claim 13, further comprising:

determining the target grouping manner based on the second indication information;
wherein the target grouping manner is determined based on at least one of the following:

in a case that the second indication information comprises the third number of groups, the target grouping manner comprises the second grouping manner;
in a case that the second indication information comprises the first number of groups, the target grouping manner comprises the first grouping manner;
in a case that the second indication information does not comprise the first number of groups or that the first number of groups is 0, the target grouping manner comprises the second grouping manner;
in a case that the second indication information does not comprise the third number of groups or that the third number of groups is 0, the target grouping manner comprises the first grouping manner;
in a case that the fourth number of groups in the second indication information is the same as the first number of groups, the target grouping manner comprises the first grouping manner;

in a case that the fourth number of groups in the second indication information is the same as the third number of groups, the target grouping manner comprises the second grouping manner;

in a case that the fourth number of groups in the second indication information is greater than the third number of groups, the target grouping manner comprises the first grouping manner and the second grouping manner; and

in a case that the fourth number of groups in the second indication information is greater than the first number of groups, the target grouping manner comprises the first grouping manner and the second grouping manner.

15. The method according to claim 13, further comprising:

determining, based on the second indication information, whether a grouping manner for the LP-WUS is used to indicate wake-up of the terminal device; wherein

in a case that the second indication information does not comprise the fourth number of groups or that the fourth number of groups is 0, a grouping manner for the LP-WUS is not used to indicate wake-up of the terminal device; and

in a case that the second indication information does not comprise the first number of groups and does not comprise the third number of groups, a grouping manner for the LP-WUS is not used to indicate wake-up of the terminal device.

16. The method according to any one of claims 13 to 15, wherein the second indication information is carried in at least one of the following messages: system information SI, a low power synchronization signal LP-SS, a preamble part of the LP-WUS, or a radio resource control RRC release message.

17. The method according to any one of claims 2 to 12, further comprising:
determining the target grouping manner according to a grouping manner corresponding to a PEI.

18. The method according to claim 17, wherein the determining the target grouping manner according to a grouping manner corresponding to a PEI comprises at least one of the following:

in a case that the grouping manner corresponding to the PEI comprises the first grouping manner, the target grouping manner is the first grouping manner;

in a case that the grouping manner corresponding to the PEI comprises the second grouping manner, the target grouping manner is the second grouping manner;

in a case that the grouping manner corresponding to the PEI is the first grouping manner, the target grouping manner is the first grouping manner;

in a case that the grouping manner corresponding to the PEI is the second grouping manner, the target grouping manner is the second grouping manner;

in a case that the grouping manner corresponding to the PEI comprises the first grouping manner and the second grouping manner, the target grouping manner is the first grouping manner and the second grouping manner;

in a case that the grouping manner corresponding to the PEI is the first grouping manner, the target grouping manner is the second grouping manner; and

in a case that the grouping manner corresponding to the PEI is the second grouping manner, the target grouping manner is the first grouping manner.

19. The method according to claim 1, further comprising:
determining the first group ID based on a group ID corresponding to a PEI, of a terminal group to which the terminal device belongs.

20. The method according to any one of claims 1 to 19, wherein the number of bits of the first indication information is determined according to the number of groups corresponding to the LP-WUS.

21. The method according to any one of claims 1 to 20, further comprising:
receiving a PEI from a network-side device, wherein the PEI comprises indication information used to indicate a second target group ID of a second target terminal group that needs to receive a paging message.

22. The method according to any one of claims 1 to 20, further comprising:
determining not to receive a PEI, wherein the PEI comprises indication information used to indicate a second target group ID of a second target terminal group that needs to receive a paging message.

23. The method according to any one of claims 1 to 22, wherein the determining, based on the first group ID and the first indication information, whether the terminal device is to be woken up comprises at least one of the following:

in a case that the first target group ID comprises the first group ID, determining that the terminal device is to be woken up;
in a case that the first target terminal group comprises the terminal device, determining that the terminal device is to be woken up;
in a case that the first target group ID does not comprise the first group ID, determining that the terminal device is not to be woken up; and
in a case that the first target terminal group does not comprise the terminal device, determining that the terminal device is not to be woken up.

24. The method according to any one of claims 1 to 23, wherein the determining whether the terminal device is to be woken up comprises at least one of the following:

determining whether the terminal device is to receive a paging message;
determining whether the terminal device is to receive a PEI;
determining whether the terminal device is to exit a low power sleep mode;
determining whether the terminal device is to monitor a physical downlink control channel PDCCH;
determining whether the terminal device is to transmit/receive a signal through a main receiver;
determining whether the terminal device is to receive system information; and
determining whether the terminal device is to perform random access.

25. A communication method performed by an access network device, comprising:

determining a first group identifier ID of a first terminal group to which a terminal device belongs; and
transmitting a low power wake-up signal LP-WUS, wherein the LP-WUS comprises first indication information, the first indication information being used to indicate waking up terminal devices in the first terminal group corresponding to the first group ID, or the LP-WUS corresponds to a first target group ID of a first target terminal group to be woken up.

26. The method according to claim 25, wherein the determining a first group identifier ID of a first terminal group to which a terminal device belongs comprises:
determining the first group ID according to a target grouping manner; wherein the target grouping manner comprises at least one of a first grouping manner based on a terminal device identifier and a second grouping manner controlled by a core network.

27. The method according to claim 26, wherein when the target grouping manner comprises the first grouping manner, the determining the first group ID according to a target grouping manner comprises:
determining the first group ID based on a first terminal device identifier of the terminal device and a first number of groups; wherein the first number of groups is a maximum number of groups, corresponding to the LP-WUS, that is determined according to the first grouping manner, or the number of groups, corresponding to the LP-WUS, that is determined according to the first grouping manner, or the number of groups corresponding to the LP-WUS, or the number of bits corresponding to first indication information in the LP-WUS.

28. The method according to claim 27, further comprising:

determining a second terminal device identifier of the terminal device based on a mobile subscriber identifier of the terminal device and a first parameter X; and
determining the first terminal device identifier based on the second terminal device identifier and a second parameter.

29. The method according to claim 28, wherein in a non-eDRX scenario, the first parameter X is a product of 8192 and the first number of groups; or,
in an eDRX scenario, the first parameter X is a product of 32798 and the first number of groups.

30. The method according to claim 28, wherein in a non-eDRX scenario, the first parameter X is a product of 1024 and the first number of groups; or,
in an eDRX scenario, the first parameter X is a product of 4096 and the first number of groups.

31. The method according to any one of claims 28 to 30, wherein the second parameter comprises a second number of groups; wherein the second number of groups is a maximum number of groups, corresponding to a paging early indication PEI, that is determined according to the first grouping manner, or the number of groups, corresponding to the PEI, that is determined according to the first grouping manner, or the number of groups corresponding to the PEI.

32. The method according to any one of claims 28 to 30, wherein the second parameter comprises a second number of groups; wherein the second number of groups satisfies at least one of the following:

when a network has configured PEI or PEI grouping, or the terminal device is operating under PEI, the second number of groups is a maximum number of groups, corresponding to the PEI, that is determined according to the first grouping manner, or the number of groups, corresponding to the PEI, that is determined according to the first grouping manner, or the number of groups corresponding to the PEI; and when a network has not configured PEI or PEI grouping, or the terminal device does not support PEI or is not operating under PEI, the second number of groups is 1.

33. The method according to claim 26, wherein when the target grouping manner comprises the second grouping manner, the determining the first group ID according to a target grouping manner comprises: receiving the first group ID from the core network device.

34. The method according to any one of claims 26 to 33, further comprising:

transmitting second indication information, wherein the second indication information is used to indicate at least one of a first number of groups, a third number of groups, and a fourth number of groups; wherein

the first number of groups comprises a maximum number of groups, corresponding to the LP-WUS, that is determined according to the first grouping manner, or the number of groups, corresponding to the LP-WUS, that is determined according to the first grouping manner, or a base-2 logarithm of the maximum number of groups, corresponding to the LP-WUS, that is determined according to the first grouping manner, or a base-2 logarithm of the number of groups, corresponding to the LP-WUS, that is determined according to the first grouping manner;

the third number of groups comprises a maximum number of groups, corresponding to the LP-WUS, that is determined according to the second grouping manner, or the number of groups, corresponding to the LP-WUS, that is determined according to the second grouping manner, or a base-2 logarithm of the maximum number of groups, corresponding to the LP-WUS, that is determined according to the second grouping manner, or a base-2 logarithm of the number of groups, corresponding to the LP-WUS, that is determined according to the second grouping manner; and

the fourth number of groups comprises the number of groups corresponding to the LP-WUS, or the number of bits corresponding to first indication information in the LP-WUS, or the number of bits used to indicate a first target terminal group in the LP-WUS, or a base-2 logarithm of the number of groups corresponding to the LP-WUS, or a value obtained by taking 2 as the base and the number of bits of the first indication information in the LP-WUS as an exponent, or a value obtained by taking 2 as the base and the number of bits used to indicate the first target terminal group in the LP-WUS as an exponent.

35. The method according to any one of claims 26 to 33, further comprising:

determining the target grouping manner according to a grouping manner corresponding to a PEI;
wherein the target grouping manner is determined according to at least one of the following:

in a case that the grouping manner corresponding to the PEI comprises the first grouping manner, the target grouping manner is the first grouping manner;
in a case that the grouping manner corresponding to the PEI comprises the second grouping manner, the target grouping manner is the second grouping manner;
in a case that the grouping manner corresponding to the PEI is the first grouping manner, the target grouping manner is the first grouping manner;
in a case that the grouping manner corresponding to the PEI is the second grouping manner, the target grouping manner is the second grouping manner;
in a case that the grouping manner corresponding to the PEI comprises the first grouping manner and the second grouping manner, the target grouping manner is the first grouping manner and the second grouping manner;
in a case that the grouping manner corresponding to the PEI is the first grouping manner, the target grouping manner is the second grouping manner; and
in a case that the grouping manner corresponding to the PEI is the second grouping manner, the target grouping manner is the first grouping manner.

36. The method according to claim 25, further comprising:
determining the first group ID based on a group ID corresponding to a PEI, of a terminal group to which the terminal device belongs.

37. The method according to any one of claims 25 to 36, further comprising:
transmitting a PEI, wherein the PEI comprises indication information used to indicate a second target group ID of a second target terminal group that needs to receive a paging message.

38. A communication apparatus, comprising:

a determining unit configured to determine a first group identifier ID of a first terminal group to which a terminal device belongs;
a receiving unit configured to receive a low power wake-up signal LP-WUS from an access network device, wherein the LP-WUS comprises first indication information, the first indication information being used to indicate a first target group ID of a first target terminal group to be woken up, or the LP-WUS corresponds to the first target group ID of the first target terminal group to be woken up; and
the determining unit is further configured to determine, based on the first group ID and/or the first indication information, whether the terminal device is to be woken up.

39. A communication apparatus, comprising:

a determining unit configured to determine a first group identifier ID of a first terminal group to which a terminal device belongs; and
a transmitting unit configured to transmit a low power wake-up signal LP-WUS, wherein the LP-WUS comprises first indication information, the first indication information being used to indicate waking up terminal devices in the first terminal group corresponding to the first group ID, or the LP-WUS corresponds to a first target group ID of a first target terminal group to be woken up.

40. A terminal device, comprising:
a processor and a memory, wherein the memory is configured to store a computer program, and the processor is configured to invoke and run the computer program stored in the memory to perform the method according to any one of claims 1 to 24.

41. A network device, comprising:
a processor and a memory, wherein the memory is configured to store a computer program, and the processor is configured to invoke and run the computer program stored in the memory to perform the method according to any one of claims 25 to 37.

42. A computer-readable storage medium configured to store a computer program, wherein the computer program causes a computer to perform the method according to any one of claims 1 to 24, or the method according to any one of claims 25 to 37.

Core network
device 130

Access network
device 120

Terminal
device 110

FIG. 1

First
module

Off->On

Trigger

Lp-wus/low power
beacon signal

Second
module

On->Off

Terminal

FIG. 2

| Preamble | Data |
|----------|------|

FIG. 3

FIG. 4A

OOK bit=1 OOK bit=1 OOK bit=0

Bit-bit

Time

OFDM bit=4 OFDM bit=4 OFDM bit=4

FIG. 4B

Index-index

| Subgroup 0 | Subgroup 1 | ... | Subgroup 0 | Subgroup 1 | ... | Subgroup 0 | Subgroup 1 | ... | Subgroup 0 | Subgroup 1 | ... |
|---|---|---|---|---|---|---|---|---|---|---|---|

Bit field 0     Bit field 1     Bit field 2     Bit field 3

PO1:     PO2:     PO3:     PO4:

PO_index=0   PO_index=1   PO_index=2   PO_index=3

FIG. 5

200

```
┌─────────────┐                                    ┌─────────────┐
│  Terminal   │                                    │Access network│
│   device    │                                    │   device    │
└─────────────┘                                    └─────────────┘
       │                                                  │
┌──────────────────────────┐          ┌──────────────────────────────┐
│ S210. Determine a first  │          │ S220. Determine the first group│
│ group ID of a first      │          │ ID of the first terminal group to│
│ terminal group to which  │          │ which the terminal device belongs│
│ the terminal device      │          └──────────────────────────────┘
│ belongs                  │                          │
└──────────────────────────┘                          │
       │                                               │
       │  S230. Transmit LP-WUS including a first indication
       │     information that is used to indicate the first target
       │     group ID of the first target terminal group that needs
       │◄────────────────── to be woken up ───────────────────────┤
       │                                                  │
┌──────────────────────────┐                             │
│ S240. Determine whether  │                             │
│ the terminal device is to│                             │
│ be woken up based on the │                             │
│ first group ID and/or the│                             │
│ first indication         │                             │
│ information              │                             │
└──────────────────────────┘                             │
       │                                                  │
```

FIG. 6

```
┌─────────────┐                                    ┌─────────────┐
│  Terminal   │                                    │Access network│
│   device    │                                    │   device    │
└─────────────┘                                    └─────────────┘
       │                                                  │
       │   S250. Transmit second indication information that is
       │      used to indicate at least one of a first number of
       │      groups, a third number of groups, and a fourth
       │◄───────────────── number of groups ──────────────────────┤
       │                                                  │
┌──────────────────────────┐                             │
│ S260. Determine a target │                             │
│ grouping manner based on │                             │
│ the second indication    │                             │
│ information              │                             │
└──────────────────────────┘                             │
       │                                                  │
┌──────────────────────────┐                             │
│ S270. Determine the      │                             │
│ target grouping manner   │                             │
│ according to a grouping  │                             │
│ method corresponding to  │                             │
│ PEI                      │                             │
└──────────────────────────┘                             │
       │                                                  │
```

FIG. 7

300

| Access network device | | Core network device |

S310. Transmit first notification message

S320. Transmit second notification message

FIG. 8

Communication apparatus 10

Determining unit 11

Receiving unit 12

FIG. 9

Communication apparatus 20

Determining unit 21

Sending unit 22

FIG. 10

30

Electronic device

33

Transceiver

31

Memory

Computer program ⟷ Processor

32

FIG. 11

Antenna

41

Control circuit

40

Memory ⟷ Processor

42

Input/output apparatus

FIG. 12

FIG. 13

## INTERNATIONAL SEARCH REPORT

| | |
|---|---|
| International application No. | |
| | **PCT/CN2024/110673** |

**A. CLASSIFICATION OF SUBJECT MATTER**

H04W52/02(2009.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

3GPP, CNTXT, ENTXTC, ENTXT, DWPI: 组, 终端, UE, 唤醒, WUS, 携带, 包含, 包括, 标识, ID, PEI, LP?WUS, group, terminal, wake, carry, contain, identification

**C. DOCUMENTS CONSIDERED TO BE RELEVANT**

| Category* | Citation of document, with indication, where appropriate, of the relevant passages | Relevant to claim No. |
|---|---|---|
| X | US 2020196239 A1 (HUAWEI TECHNOLOGIES CO., LTD.) 18 June 2020 (2020-06-18) description, paragraphs [0051]-[0081], and figure 2 | 1-2, 11-12, 17-26, 33, 35-42 |
| A | CN 113498598 A (IDAC HOLDINGS, INC.) 12 October 2021 (2021-10-12) entire document | 1-42 |
| A | US 2022377666 A1 (LENOVO (BEIJING) LTD.) 24 November 2022 (2022-11-24) entire document | 1-42 |
| A | WO 2020102972 A1 (HUAWEI TECHNOLOGIES CO., LTD.) 28 May 2020 (2020-05-28) entire document | 1-42 |
| A | FUTUREWEI. "Evaluation of LP-WUS and Performance Results" *3GPP TSG RAN WG1 #112-bis-e, R1-2302331*, 26 April 2023 (2023-04-26), entire document | 1-42 |

| | | |
|---|---|---|
| ☐ Further documents are listed in the continuation of Box C. | ☑ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| | |
|---|---|
| Date of the actual completion of the international search | Date of mailing of the international search report |
| **17 October 2024** | **23 October 2024** |

| | |
|---|---|
| Name and mailing address of the ISA/CN | Authorized officer |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/110673**

| Patent document cited in search report | | | Publication date (day/month/year) | Patent family member(s) | | | Publication date (day/month/year) |
|---|---|---|---|---|---|---|---|
| US | 2020196239 | A1 | 18 June 2020 | MX | 2020002115 | A | 18 September 2020 |
| | | | | EP | 3668191 | A1 | 17 June 2020 |
| | | | | JP | 2020532233 | A | 05 November 2020 |
| | | | | WO | 2019037747 | A1 | 28 February 2019 |
| | | | | CN | 109429314 | A | 05 March 2019 |
| | | | | IN | 202037008695 | A | 29 May 2020 |
| | | | | CN | 111510999 | A | 07 August 2020 |
| CN | 113498598 | A | 12 October 2021 | WO | 2020172549 | A1 | 27 August 2020 |
| | | | | BR | 112021016607 | A2 | 03 November 2021 |
| | | | | US | 2022095228 | A1 | 24 March 2022 |
| | | | | EP | 3928482 | A1 | 29 December 2021 |
| | | | | JP | 2022521331 | A | 06 April 2022 |
| | | | | IN | 202117037518 | A | 03 December 2021 |
| | | | | VN | 84103 | A | 25 February 2022 |
| US | 2022377666 | A1 | 24 November 2022 | WO | 2021062671 | A1 | 08 April 2021 |
| WO | 2020102972 | A1 | 28 May 2020 | CN | 112956256 | A | 11 June 2021 |

Form PCT/ISA/210 (patent family annex) (July 2022)

**EP 4 761 380 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311012573
- CN 202411070560

- CN 2024109690 W